(19) **Europäisches Patentamt**
**European Patent Office**
**Office européen des brevets**

(11) **EP 2 847 557 B1**

(12) **EUROPÄISCHE PATENTSCHRIFT**

(45) Veröffentlichungstag und Bekanntmachung des Hinweises auf die Patenterteilung:
**23.08.2017 Patentblatt 2017/34**

(21) Anmeldenummer: **12778758.8**

(22) Anmeldetag: **31.10.2012**

(51) Int Cl.:
*G01J 3/02* (2006.01)     *G02B 5/20* (2006.01)
*G02B 5/00* (2006.01)     *H01L 31/0216* (2014.01)
*H01L 27/146* (2006.01)

(86) Internationale Anmeldenummer:
**PCT/EP2012/071595**

(87) Internationale Veröffentlichungsnummer:
**WO 2013/167208 (14.11.2013 Gazette 2013/46)**

(54) **MIKROOPTISCHES FILTER UND DESSEN VERWENDUNG IN EINEM SPEKTROMETER**

MICRO-OPTICAL FILTER AND THE USE THEREOF IN A SPECTROMETER

FILTRE MICRO-OPTIQUE ET UTILISATION DUDIT FILTRE DANS UN SPECTROMÈTRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.05.2012 EP 12167001**

(43) Veröffentlichungstag der Anmeldung:
**18.03.2015 Patentblatt 2015/12**

(73) Patentinhaber: **Elmos Semiconductor Aktiengesellschaft**
**44227 Dortmund (DE)**

(72) Erfinder:
• **BURCHARD, Bernd**
**44227 Dortmund (DE)**

• **KLEINSCHMIDT, Frank**
**44227 Dortmund (DE)**
• **MÖLLER, Jesco**
**44227 Dortmund (DE)**

(74) Vertreter: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(56) Entgegenhaltungen:
**EP-A1- 2 521 179     WO-A1-2012/007147**
**US-A1- 2006 044 429**

**Beschreibung**

Die Erfindung betrifft eine Vorrichtung zur selektiven Transmission des Spektrums elektromagnetischer Strahlung innerhalb eines vorgegebenen Wellenlängenbereichs, wobei die Vorrichtung unter Verwendung von Prozessschritten für die Halbleiterbauelementfertigung und damit recht kleinformatig als mikroopto-elektronisches System (MOES) herstellbar ist.

Spektrometer sind in den unterschiedlichsten Ausführungsformen bekannt. Bei einem Spektrometer trifft die zu untersuchende elektromagnetische Strahlung auf eine Vielzahl von strahlungsempfindlichen Sensorelementen auf, die für Strahlung in unterschiedlichen Frequenzbändern innerhalb des interessierenden Frequenzbereichs, d.h. für Strahlung mit unterschiedlichen Wellenlängen innerhalb des interessierenden Wellenlängenbereichs empfindlich sind. Somit kann also die Intensität der Strahlung über deren interessierenden Wellenlängenbereich messtechnisch erfasst werden.

Die wellenlängenselektiven Sensorelemente können dabei beispielsweise durch Fotodioden realisiert werden, denen unterschiedlich breite Schlitzblenden oder dergleichen Lochblenden zugeordnet sind. Beispiele für derartige Festkörper-Spektrometer finden sich in EP-A-1 475 963 und EP-A-1 517 374. Bei den Spektrometern gemäß dieser beiden Schriften werden die Lochblenden jeweils durch eine einzige Lochmaske gebildet, wobei die die Löcher definierenden Ränder der Fenster der Lochmaske von Lochblende zu Lochblende betrachtet jeweils verschiedene Abstände aufweisen. Dass Schlitz und Lochblenden wellenlängenselektiv wirken, ist seit langem bekannt (siehe z.B. aus P. Morse, P.J. Rubenstein; The Diffraction of Waves by Ribbons and by Slits; Physical Review; Vol. 54; Dec. 1st 1938; p. 895-898). Die Herstellung solcher Lochblenden für optische Komponenten setzt einen hochpräzisen Fertigungsprozess im nm Maßstab voraus, was die Herstellung und Reproduzierbarkeit der Lochmaske betrifft.

In der chemischen, biochemischen, medizinischen und forensischen Analytik spielt die Spektrometrie eine wesentliche Rolle. Daher ist die Verfügbarkeit eines einfach herstellbaren Spektrometers eine wesentliche Voraussetzung für die Breite Anwendung einer Real-Time-Spektromie bzw. einer flächendeckenden Spektrometrie z.B. in der Medizintechnik, in der Landwirtschaft oder allgemein in der Industrie. Das Problem hierbei ist ein präzises, energieselektives optisches Funktionselement kostengünstig herstellen zu können. Praktisch alle Spektrometer verfügen heute über mikroelektronische Schaltkreise, die typischerweise in CMOS-Technologie hergestellt sind.

Aus US-A-2006/0044429 ist eine Vorrichtung zur Erfassung des Spektrums elektromagnetischer Strahlung bekannt, bei der nach dem Prinzip der Interferenz gearbeitet wird (siehe den Absatz 167 dieser Druckschrift).

In US-A-2010/0176280 ist ein optisches Element mit einem optischen Filter beschrieben, das aus zwei Filterelementen besteht, wobei mindestens eines der Filterelemente ein metallisches optisches Filter ist.

In WO-A-2009/106316 ist ein multispektraler Bildsensor beschrieben, der konzentrische Ringschlitze aufweist.

US-A-2008/0170143 zeigt ein bildaufnehmendes Element, bei dem eine Lochblende vorgesehen ist, die innerhalb verschiedener Teilbereiche verschiedene Lochabstände aufweist.

Schließlich zeigt EP-A-2 251 718 ein metallisches optisches Filter, das photolitographisch herstellbar ist.

EP-A-2 521 179 (Dokument gemäß Art. 54(3) EPÜ) zeigt eine Vorrichtung zur Erfassung des Spektrums elektromagnetischer Strahlung innerhalb eines vorgegebenen Wellenlängenbereichs.

Die Frequenz- bzw. Wellenlängenabhängigkeit der Empfindlichkeit der Sensorelemente kann durch ein optisches Filter realisiert werden, das als Lochblende mit einer Vielzahl von Strahlungsdurchlassöffnungen ausgebildet ist, deren Größen unterschiedlich gewählt werden. Optische Filter auf Lochblendenbasis sind aber auch in anderen Anwendungen als bei Spektrometern relevant, wobei die Ausbildung des Filters so gewählt sein sollte, dass die interessierende Strahlung das Filter und damit die (mindestens eine Strahlungsdurchlassöffnung) möglichst ungestört passieren kann.

Aufgabe der Erfindung ist es, eine (z. B. Festkörper-)Vorrichtung zur selektiven Transmission des Spektrums elektromagnetischer Strahlung zu schaffen, die die interessierende Strahlung im Wesentlichen ungestört hindurchlässt.

Zur Lösung dieser Aufgabe wird mit der Erfindung eine Vorrichtung zur Transmission des Spektrums elektromagnetischer Strahlung innerhalb eines vorgegebenen Wellenlängenbereichs vorgeschlagen. Einzelne Ausgestaltungen der Erfindung sind Gegenstand der jeweiligen Unteransprüche.

Die erfindungsgemäße Vorrichtung weist einen optisch nicht störenden Träger auf, der aus einem Material besteht, das für die die Vorrichtung passierende elektromagnetische Strahlung dem Zweck entsprechend hinreichend durchlässig ist, d. h. nicht nennenswert absorbierend, reflektierend odgl. störend wirkt. Der Träger kann beispielsweise aus einem halbleitenden Material wie z. B. p-dotiertem Silizium bestehen. Wenn die Vorrichtung lithografisch hergestellt wird, werden dünne Schichten eingesetzt, die optisch wirksam sein können, und zwar als Wellenleiter. Dünne Schichten können nur für extrem hochfrequente, d. h. extrem kurzwellige Strahlung als Wellenleiter wirken. Solche Wellenleitungseigenschaften können auch parasitär und damit unerwünscht sein. Auf derartige dünne zumeist dielektrische, optisch transparente Schichten kann aber bei Anwendung von Lithografie-Herstellungsverfahren nicht verzichtet werden. Daher ist nach der Erfindung vorgesehen, dass die oberhalb des Trägers angeordnete Lochblende zumindest teilweise auf einer elektrisch isolierenden und optisch transparenten Dielektrizitätsschicht angeordnet ist, deren Dicke im Bereich zwischen kleiner als oder gleich der Hälfte bis kleiner oder gleich einem Viertel der vorgegebenen unteren Grenzwellenlänge der Vorrichtung ist, während die Lochblende mindestens einen Strahlungsdurchlassschlitz aufweist, (nachfolgend mit Strahlungsdurchlassschlitzöffnung bezeichnet)wobei der Schlitz eine solche Breite hat, dass durch den Schlitz Strahlung mit einer Wellenlänge gelangt, die kleiner oder gleich einer vorgegebenen oberen Grenzwellenlänge ist.

Durch die erfindungsgemäße Ausgestaltung der optisch transparenten Dielektrizitätsschicht ist es möglich, dass sich ausschließlich hochfrequente, d. h. kurzwellige Strahlung anders als vorgesehen innerhalb der optischen Transmissionsvorrichtung ausbreitet, indem diese hochfrequente Strahlung nach dem Passieren der Strahlungsdurchlassschlitzöffnung in die Dielektrizitätsschicht einkoppelt und damit störend wirken könnte. Dies kann in vorteilhafter Weiterbildung der Erfindung durch ein der Vorrichtung vorgeschaltetes Hochpass- bzw. Tiefpassfilter weiter unterdrückt werden, welches die ansonsten in die Dielektrizitätsschicht einkoppelnde elektromagnetische Strahlung herausfiltert und damit gewährleistet, dass diese elektromagnetische Strahlung erst gar nicht in die Strahlungsdurchlassschlitzöffnung gelangt.

Anders ausgedrückt wird mit der Erfindung eine Transmissionsvorrichtung für Strahlung geschaffen, die durch die Breite der Strahlungsdurchlassschlitzschlitzöffnung eine obere Grenzwellenlänge definiert, bis zu der Strahlung durch die Strahlungsdurchlassschlitzöffnung hindurchtritt. Auf den Frequenzbereich bezogen heißt das, dass die Vorrichtung eine untere Grenzfrequenz aufweist, so dass Strahlung mit einer Frequenz, die gleich oder größer der unteren Grenzfrequenz ist, hindurch gelassen wird. Ab einer oberen Grenzfrequenz wird (unvermeidbar) Strahlung in die Dielektrizitätsschicht eingekoppelt. Somit tritt Strahlung mit einer Frequenz, die oberhalb dieser Grenzfrequenz liegt, nicht durch die Strahlungsdurchlassschlitzschlitzöffnung insoweit hindurch, als dass diese Strahlung nicht durch die Dielektrizitätsschicht hindurch gelangt (bezogen auf die Dickenerstreckung der Dielektrizitätsschicht). In gewisser Weise handelt es sich also bei der erfindungsgemäßen Vorrichtung um ein Bandpassfilter.

In weiterer vorteilhafter Ausgestaltung der Erfindung kann vorgesehen sein, dass sich die Dielektrizitätsschicht zwischen dem Träger und der gesamten Lochblende erstreckt. Alternativ ist es aber auch möglich, dass die Lochblende außerhalb der Dielektrizitätsschicht auf dem Träger ausgebildet ist.

Zur Reduktion von Interferenzen, Resonanzen, Dämpfungen odgl. Störungen der die Transmissionsvorrichtung passierenden Strahlung ist es ferner von Vorteil, wenn die Lochblende ein definiertes elektrisches Potential aufweist. Hierzu ist es zweckmäßig, wenn die Lochblende gegenüber dem Träger elektrisch isoliert ist. In dem Träger können nämlich bevorzugt strahlungssensitive Sensorelemente integriert sein, was bei Verwendung von halbleitendem Material für den Träger in Form von beispielsweise Dioden realisiert sein kann. Um die Lochblende gegenüber den verschiedenen Spannungspotentialen, die der Träger in verschiedenen Bereichen führt, zu entkoppeln, ist also die elektrische Isolation zweckmäßig.

Strahlung, die auf den Rand der Strahlungsdurchlassschlitzöffnung bzw. auf die Ränder der Strahlungsdurchlassschlitzöffnungen auftrifft, kann ebenfalls zu Störungen (Interferenzen, Reflektionen, Resonanzen odgl.) führen. Wenn derartig umgelenkte bzw. veränderte Strahlung die Transmissionsvorrichtung passiert, kann dies ebenfalls zu negativen Effekten führen. Insoweit zweckmäßig ist es, wenn auf den Rand auftreffende Strahlung möglichst wieder von der Vorrichtung weggerichtet wird. Dies wird nach der Erfindung dadurch erreicht, dass der Rand (bzw. zumindest ein Teilabschnitt des Randes) der mindestens einen bzw. jeder Strahlungsdurchlassschlitzöffnung angeschrägt ist.

Nach der Erfindung ist ferner vorgesehen, dass die Lochblende zwei lateral gegeneinander versetzte und in unterschiedlichen Ebenen oberhalb des Trägers angeordnete Lochmasken aufweist und dass die beiden Lochmasken einander überlappende Fenster aufweisen, die die mindestens eine Strahlungsdurchlassschlitzöffnung bzw. jeweils eine Strahlungsdurchlassschlitzöffnung definieren.

Nach der Erfindung ist die erste Lochmaske auf der Dielektrizitätsschicht ausgebildet, wobei auf der ersten Lochmaske und innerhalb von deren Fenster oder Fenstern eine Zwischendielektrizitätsschicht aus einem elektrisch isolierenden und optisch durchlässigen Dielektrizitätsmaterial ausgebildet ist und dass die zweite Lochmaske auf der Zwischendielektrizitätsschicht ausgebildet ist, wobei die Gesamtdicke der Doppelschicht aus der Dielektrizitätsschicht und der Zwischendielektrizitätsschicht zwischen der zweiten Lochmaske und dem Träger kleiner oder gleich der Hälfte bis einem Viertel der unteren Grenzwellenlänge ist.

Schließlich ist es auch möglich, dass die Dielektrizitätsschicht innerhalb des oder der Fenster der ersten Lochmaske eine gegenüber ihrem übrigen Erstreckungsbereich reduzierte Dicke aufweist.

Bei einer weiteren vorteilhaften Ausgestaltung der Erfindung kann vorgesehen sein, dass das Material und/oder die Materialdicke der Lochblende bzw. der beiden Lochmasken für eine Absorption und/oder Reflektion von interessierender Strahlung (d. h. von Strahlung mit einer Wellenlänge, die die Strahlungsdurchlassschlitzöffnung(en) passieren kann), die nicht auf die Strahlungsdurchlassschlitzöffnung bzw. Strahlungsdurchlassschlitzöffnungen auftrifft, so gewählt ist/sind, dass sich insbesondere (i) ein Absorptionsgrad von mindestens 60 % oder mindestens 80 % und (ii) ein Reflektionsgrad von kleiner als 40 %, vorzugsweise kleiner als 20 % einstellt.

Ferner ist es möglich, dass die Lochblende eine Vielzahl von unterschiedlich großen und damit unterschiedlich große obere Grenzwellenlängen definierende Strahlungsdurchlassschlitzöffnungen aufweist, wobei pro unterschiedlicher Breite ein oder mehrere Strahlungsdurchlassschlitzöffnungen vorgesehen sind, und dass die Dicke der Schicht oder Schichten zwischen dem Träger und der Lochblende oder Teilen davon bzw. zwischen dem Träger und den beiden Lochmasken oder der zweiten Lochmaske jeweils kleiner oder gleich der Hälfte bis einem Viertel der kleinsten der durch die Strahlungsdurchlassschlitzöffnung definierten oberen Grenzwellenlängen ist.

Die erfindungsgemäße (mikro-)optische Transmissionsvorrichtung kann mit Vorteil eingesetzt werden bei einem Spektrometer, und zwar zur Wellenlängenselektion von mit dem Spektrometer zu detektierender elektromagnetischer Strahlung, wobei jeder Strahlungsdurchlassschlitzöffnung ein diese eine Strahlungsdurchlassschlitzöffnung passierende Strahlung empfangendes, strahlungssensitives Sensorelement zur Ermittlung der Intensität dieser Strahlung zugeordnet ist. Hierbei kann das Spektrometer versehen sein mit

- einem Substrat,
- einer oberhalb des Substrats angeordneten ersten Lochmaske aus einem für Strahlung innerhalb des vorgegebenen Wellenlängenbereichs undurchlässigen Material, wobei die erste Lochmaske eine Vielzahl von ersten Fenstern aufweist,
- einer Vielzahl von in dem Substrat angeordneten und für Strahlung bei jeweils einer verschiedenen Wellenlänge innerhalb des vorgegebenen Wellenlängenbereichs empfindlichen Sensorelementen, und
- einer oberhalb der ersten Lochmaske angeordneten, zweite Fenster aufweisenden zweiten Lochmaske aus einem für die Strahlung innerhalb des vorgegebenen Wellenlängenbereichs undurchlässigen Material,
- wobei die zweiten Fenster der zweiten Lochmaske überlappend mit den Fenstern der ersten Lochmaske angeordnet sind und gegenüberliegende Ränder der jeweils zwei sich überlappenden Fenster der beiden Lochmasken die Breite eines jeweils einem Sensorelement zugeordneten Strahlungsdurchlassschlitzes zum Durchlassen von Strahlung innerhalb des vorgegebenen Wellenlängenbereichs zu dem unterhalb des Strahlungsdurchlassschlitzes angeordneten Sensorelement definieren,
- wobei jeweils benachbarte erste Fenster einen ersten Abstand und jeweils benachbarte zweite Fenster einen zweiten Abstand aufweisen, der verschieden ist von dem ersten Abstand (optischer Nonius) und
- wobei für die Erfassung der Intensität von elektromagnetischer Strahlung bei jeder der mehreren, interessierenden Wellenlängen innerhalb des vorgegebenen Wellenlängenbereichs mindestens einer der Strahlungsdurchlassschlitze mit einer der jeweils interessierenden Wellenlänge zugeordneten Breite vorgesehen ist.

Die erfindungsgemäße Vorrichtung lässt sich mit Vorteil bei einem Festkörper-Spektrometer einsetzen, das ein Substrat, insbesondere ein Halbleitersubstrat als Träger der Vorrichtung aufweist, auf dem zwei Lochmasken übereinander bzw. die Lochblende angeordnet sind. Jede der beiden Lochmasken weist dabei ein Material auf, das für elektromagnetische Strahlung innerhalb des interessierenden Wellenlängenbereichs undurchlässig ist. Jede der beiden Lochmasken ist ferner mit einer Vielzahl von ersten bzw. zweiten Fenstern versehen. Die Größe dieser Fenster und die Form der Berandung werden dabei zweckmäßigerweise so gewählt, dass parasitäre Resonanzen minimiert insbesondere in Form von stehenden Wellen minimiert werden. Unter einer Resonanz in diesem Sinne ist zu verstehen, dass eine elektromagnetische Welle mehrfach auf sich selbst zurückgeworfen wird und dabei keine oder nur eine sehr geringe Phasenverschiebung auftritt, sodass es zu einer konstruktiven Interferenz beispielsweise wie bei einem Fabry-Perot-Interferometer kommt. Vorzugsweise ist das Lochmaskenmaterial oder eine Beschichtung der Lochmasken für die Strahlung innerhalb des interessierenden Wellenlängenbereichs undurchlässig und/oder nicht reflektiv und/oder nicht refraktiv. Das bedeutet, dass Resonanzstrecken, die das Lochmaskenmaterial enthalten, vorzugsweise durch Maximierung der Lichtabsorption oder Streuung in eine unschädliche Richtung maximal bedämpft werden. Innerhalb des Substrats befinden sich eine Vielzahl von für Strahlung innerhalb des interessierenden Wellenlängenbereichs empfindliche Sensorelemente.

Die beiden Lochmasken sind relativ zueinander derart angeordnet, dass sich ihre Fenster mehr oder weniger überlappen. Dabei ist der Lochabstand beider Lochmasken geringfügig verschieden voneinander, so dass der Überlappungsgrad benachbarter Fenster der beiden Lochmasken variiert. Hierdurch entstehen unterschiedlich große Löcher bzw. Strahlungsdurchlassschlitze aus jeweils zwei sich überlappenden Fenstern der beiden Lochmasken. Die Fenster weisen aufgrund der endlichen Dicke des Lochmaskenmaterials oberhalb der Oberfläche des Substrates angeordnete, in der Oberseite der Lochmasken liegende Öffnungen auf. Um die Bedämpfung der durch die Kanten mit anderen spiegelnden Flächen in der Konstruktion gebildeten Resonanzstrecken zu maximieren, werden die gegenüberliegenden Ränder der Fenster der beiden Lochmasken, die die jeweiligen Strahlungsdurchlassschlitze bilden, dabei gegensinnig angeschrägt, was eine schräg gerichtete Weiterausbreitung des Lichts nach dem Durchgang durch den Strahlungsdurchlassschlitz zur Folge hat und damit eine Resonanz zwischen den Lochmasken und der Substratoberfläche durch Streuung des Lichts aus der Konstruktion heraus vermeidet bzw. durch Senkung der Resonatorgüte minimiert. Jedem dieser Löcher bzw. Strahlungsdurchlassschlitze ist ein Sensorelement, und zwar typischerweise insbesondere genau ein Sensorelement zugeordnet, so dass sich letztendlich wellenlängenselektive Sensorelemente ergeben. Die beiden Lochmasken wirken also als Transmissionsvorrichtung zur wellenlängenabhängigen Dämpfung und damit anders als im Stand der Technik, wo in US-A-2006/0044429 andere physikalische Dispersions- und Interferenz-Effekte genutzt werden. US-A-2006/0044429 nutzt ausdrücklich wellenlängenabhängige Interferenzen und Resonanzen zur Selektion verschiedener Farben (vergl. Fig. 15, 16, 17 in US-A-2006/0044429). Daher verfügt jeder der Schlitze (z.B. Fig. 41, Element 7 & 7b in US-A-2006/0044429) auch über mehrere Detektoren. In dem konkreten Fall verfügen die Schlitze über einen Blau-Detektor (Fig. 41, Element 12B in US-A-2006/0044429), zwei Grün-Detektoren links und rechts der Schlitzstruktur (Fig. 41, Element 12G in US-A-2006/0044429), und zwei Rot-Detektoren links und rechts der Schlitzstruktur (Fig. 41, Element 12R in US-A-2006/0044429), die mit der nächsten Struktur zur Platzersparnis geteilt werden. Die Auflösung dieser Struktur aus dem Stand der Technik ist naturgemäß aufgrund der kleinen optischen Weglänge begrenzt und gegebenenfalls nur für wenige Farben geeignet, im konkreten Beispiel die Farben rot, grün und blau. Auch würde der Platz für die Detektoren bei mehr Farben nicht ausreichen. Die Konstruktion der in US-A-2006/0044429 offengelegten Vorrichtung ist also auch nicht geeignet, eine höhere Auflösung zu erreichen und damit den Zweck der vorliegenden Erfindung zu erfüllen.

Vorteilhafterweise sind die Löcher bzw. Strahlungsdurchlassschlitze nicht durch die Ränder der Fenster einer einzigen Lochmaske, sondern durch die sich gegenüberliegenden Ränder der sich überlappenden Fenster zweier Lochmasken gebildet. Damit wird die Größe der einzelnen Löcher bzw. Strahlungsdurchlassschlitze durch die Positionierung der beiden Lochmasken definiert. Die Positionsgenauigkeit, mit der unter Verwendung von Fotolithographieschritten in der Halbleiterbauelementfertigung zwei Lochmasken beispielsweise durch Polysiliziumbahnen oder metallisierten Bahnen hergestellt werden können, ist wesentlich größer als die Genauigkeit, mit der der Abstand der ein Fenster innerhalb einer Lochmaske definierenden Ränder gefertigt werden kann. Bei Herstellung einer genügend großen Anzahl von durch sich überlappende Fenster zweier Lochmasken ergebenden Strahlungsdurchlassschlitzen mit diesen zugeordneten Sensorelementen wird man unabhängig von der Fertigungsgenauigkeit und Positionsgenauigkeit stets eine Anzahl von Sensorelementen innerhalb des Substrats ausmachen können, deren Wellenlängenselektivität innerhalb des interessierenden Wellenlängenbereichs liegt. Nach der Herstellung des Spektrometers bzw. der Transmissionsvorrichtung bedarf es dann also lediglich noch der Kalibration, um aus der Vielzahl von hergestellten wellenlängenselektiven Sensorelementen (Sensorelement mit Strahlungsdurchlassschlitz) diejenigen nebeneinanderliegenden Sensorelemente zu identifizieren, deren Wellenlängenselektivität innerhalb des interessierenden Wellenlängenbereichs liegt.

Die Erfindung lässt sich also auch bei einem Festkörper-Spektrometer einsetzen, bei dem die spezielle Lochblendenkonstruktion als Transmissionsvorrichtung genutzt wird. Dabei können mit Hilfe zweier Lithographie-Ebenen (die beiden Lochmasken befinden sich in unterschiedlichen, vorzugsweise direkt aneinandergrenzenden Ebenen) besonders kleine Blenden hochgenau hergestellt werden. Die Schlitzbreiten der Strahlungsdurchlassschlitze dürfen $\lambda/4$ nicht überschreiten, wobei mit $\lambda$ die jeweilige Wellenlänge bezeichnet ist. Im UV-Bereich ergeben sich dann Schlitzbreiten von wenigen nm. Diese sind mit einfachen CMOS-Technologieherstellungsschritten anders als nach der Erfindung vorgeschlagen, nicht zu fertigen. Mit der Erfindung wird also eine Konstruktion für ein Spektrometer angegeben, das sich extrem kostengünstig, nämlich unter Verwendung einfacher CMOS-Technologien, herstellen lässt. Damit ist das Spektrometer bzw. die Transmissionsvorrichtung kostengünstig als Massenprodukt herstellbar.

Die Ausbildung der Sensorelemente kann unterschiedlich erfolgen. Beispielsweise ist es denkbar, die Sensorelemente als Fotodioden auszubilden. Aber auch Thermopile-Elemente sind realisierbar im Rahmen des Festkörper-Spektrometers. Ganz allgemein ist es zweckmäßig, wenn die strahlungsempfindlichen Sensorelemente jeweils zwei unterschiedliche, elektrisch leitende und in Kontakt miteinander stehende, bei Empfang von elektromagnetischer Strahlung innerhalb des vorgegebenen Wellenlängenbereichs einen veränderbaren elektrischen Parameter (beispielsweise Strom, Spannung, Widerstand, Kapazität, Induktivität, Leistung) erzeugende Materialien aufweisen, wobei die Größe der erzeugten Spannung von der Intensität der Strahlung abhängig ist.

Das Spektrometer kann sozusagen eindimensional ausgeführt sein, indem die sich durch die überlappenden Fenster der Lochmasken ergebenden, unterschiedlich breite Strahlungsdurchlassschlitze in einer Zeile oder Reihe nebeneinanderliegend angeordnet sind. Bei einer derartigen Ausgestaltung der Erfindung sollte oberhalb der Lochmasken (und ggf. oberhalb einer strahlungsdurchlässigen Passivierungsschicht) ein Polarisationsfilter angeordnet sein. Dieses Polarisationsfilter dient zur Abschirmung von elektromagnetischen Wellen, deren E Feld-Vektoren quer zur Schlitzbreite verläuft, und zum Hindurchlassen von Strahlung mit elektromagnetischen Wellen, deren E-Feld-Vektoren in Schlitzbreitenerstreckung verlaufen.

Bei der zuvor beschriebenen Variante ist also gemäß einer vorteilhaften Ausgestaltung der Erfindung vorgesehen, dass die ersten und zweiten Fenster der beiden Lochmasken sich jeweils über Flächen erstrecken, die längs zweier zueinander rechtwinkliger Aufspannachsen aufgespannt sind, dass die Abmessungen der ersten und zweiten Fenster in zumindest einer gemeinsamen ersten Achse der beiden Aufspannachsen jeweils von einem ersten und einem zweiten Begrenzungsrand des betreffenden Fensters begrenzt sind, wobei, in einer gemeinsamen ersten Achse betrachtet, jeder Strahlungsdurchlassschlitz von einem ersten Begrenzungsrand eines ersten Fensters der ersten Lochmaske und einem zweiten Begrenzungsrand eines das erste Fenster überlappenden zweiten Fensters der zweiten Lochmaske begrenzt ist, und dass der erste Abstand der ersten Begrenzungsränder jeweils benachbarter erster Fenster der ersten Lochmaske von dem zweiten Abstand der zweiten Begrenzungsränder jeweils benachbarter zweiter Fenster der zweiten Lochmaske verschieden ist, wobei oberhalb der Anordnung der Lochmasken ein Polarisationsfilter zum Abschirmen von Strahlung mit elektromagnetischen Wellen, deren E-Feld-Vektor rechtwinklig zur ersten Aufspannachse verläuft, und zum Hindurchlassen von Strahlung mit elektromagnetischen Wellen, deren E-Feld-Vektor parallel zur ersten Aufspannachse verläuft.

Auf ein Polarisationsfilter der zuvor genannten Art kann dann verzichtet werden, wenn dafür gesorgt wird, dass die Abmessungen der Strahlungsdurchlassschlitze in zwei rechtwinklig zueinander verlaufenden Aufspannachsen so gewählt sind, dass sie wellenlängenselektiv wirken. Hierbei ist dann also vorgesehen, dass die Abmessungen der ersten und zweiten Fenster auch in der gemeinsamen zweiten Achse der beiden Aufspannachsen jeweils von einem dritten und einem vierten Begrenzungsrand des betreffenden Fensters begrenzt sind, wobei, in der gemeinsamen zweiten Aufspannachse betrachtet, jeder Strahlungsdurchlassschlitz von einem dritten Begrenzungsrand des ersten Fensters der ersten Lochmaske und einem vierten Begrenzungsrand eines das erste Fenster überlappenden zweiten Fensters der zweiten Lochmaske begrenzt ist.

Wie bereits oben erwähnt, lassen sich die Lochmasken aus lichtundurchlässigem Material mit Hilfe fotolithographischer Prozesse herstellen, wie sie beispielsweise bei einem CMOS-, BICMOS- oder Bipolar-Bauelement-Herstellungsverfahren angewendet werden. Sämtlichen dieser Prozesse gemeinsam ist der Umstand, dass der Abstand gleicher Begrenzungskanten jeweils benachbarter Fenster jeder der beiden Lochmasken eine gleichbleibende erste Toleranz (von z.B. 2 nm) sowie die Positionierung der beiden Lochmasken relativ zueinander eine zweite Toleranz (von z.B. 200 nm) und die Größe der Fenster eine dritte Toleranz (typischerweise von ebenfalls ca. 200nm) aufweist, wobei letztere bei sehr kleinen Fenstergrößen deren Fertigung in einer Ebene verhindert. Daher ist die erste Toleranz mathematisch um mindestens eine Größenordnung, vorzugsweise mindestens zwei Größenordnungen kleiner ist als die zweite und dritte Toleranz. Ursache hierfür ist, dass bei fotolithografischen Prozessen, die erste Toleranz die Präzision der verwendeten Masken widerspiegelt, während die zweite Toleranz die Präzision widerspiegelt, mit der Masken zu einander bzw. relativ zu einem gegebenen Substrat positioniert werden können und die dritte Toleranz die Präzision der typischerweise angewendeten Ätzprozesse zur Fertigung der Lochblenden widerspiegelt.

Wie bereits weiter oben erwähnt, handelt es sich bei den Sensorelementen beispielsweise um Fotodioden, die im Substrat integriert sind. Zweckmäßigerweise wird dabei die auf dem Substrat ausgebildete erste Lochmaske zur Herstellung selbstjustierter Fotodioden im Substrat verwendet. Dabei ist dann vorgesehen, dass in dem Substrat von dessen Oberseite aus ein mit ersten Ladungsträgern von einem ersten Leitungstyp versehenes Gebiet ausgebildet ist, wobei in dem Gebiet mit den ersten Fenstern der ersten Lochmaske fluchtende und innerhalb der Fenster freiliegende Teilgebiete mit zweiten Ladungsträgern von einem dem ersten Leitungstyp entgegengesetzten zweiten Leitungstyp ausgebildet sind, die mit den jeweils angrenzenden Bereichen des Gebiets aus den ersten Ladungsträgern eine Fotodiode bilden.

Anwendungsbereiche von Spektrometern mit der erfindungsgemäßen Transmissionsvorrichtung sind beispielsweise:

- Flüssigkeitsüberwachung (beispielsweise Überwachung der Qualität von Brennstoffen)
- Gasdetektoren
- Biosensoren (Eine Beschichtung oberhalb der Passivierung reagiert mit einem zu messenden Inhaltsstoff der zu testenden Flüssigkeit. Diese Reaktion verändert den Brechungsindex und damit die charakteristische spektrale Frequenz an den Gitter-Pforten)
- DNA Detektoren (Die DNA wird mittels Elektrophorese in einem Medium bewegt und durch UV-Strahlung zu einer charakteristischen Fluoreszenz angeregt, die detektiert wird.)
- Sensoren und Vorrichtungen zur Beurteilung des Gesundheitszustands eines Patienten beispielsweise aufgrund eines Haut- oder Gewebespektrums oder des Spektrums von Körperflüssigkeiten wie Blut und Urin
- Partikelzähler (das Spektrum des Streulichts ist abhängig von der Größe des Partikels)
- IR- und NIR-Spektrometer
- Laser-Spektrometer
- Mikrowellenspektrometer
- Multi-Colour Bar-Codes
- Überwachungsvorrichtungen für Betriebsstoffe von Vorrichtungen in fester, gasförmiger und flüssiger Form wie beispielsweise Öl-Zustandssensoren, UREA Zustandssensoren insbesondere auch für KfZ
- Zustandsdetektoren (beispielsweise Straßenzustandsdetektoren, Vereisungsdetektoren an Flugzeugen etc.)
- Überwachungsvorrichtungen für Betriebszustände (z.B. Temperaturüberwachungen, Plasmaspektrenüberwachung, Korrosionsdetektion, Phasenübergangsdetektion, Änderungen eines Oberflächenreflektionsspektrums aufgrund von physikalischen und/oder chemischen Einwirkungen - insbesondere Verfärbungen)
- mikrooptische Demodulation für frequenzgemultiplexte optische Signale
- Frequenzselektive Verfahren für optoelektronische Anwendungen wie beispielsweise Lichtschranken etc. zur Verbesserung des Störabstandes
- Detektion von mit Mikroben befallenen Lebensmitteln und Futtermitteln.

- Bestimmung von relevanten Parametern in Lebensmitteln wie beispielsweise des Reifegrades oder eines Zucker- oder Alkoholgehaltes.
- Bestimmung des Feuchtegehaltes in Stoffen (z.B. Futtermitteln)
- Märkte: Agrar, Chemie, Glasindustrie, Lebensmittel

Bei Verwendung der erfindungsgemäßen Vorrichtung im Zusammenhang mit einer Vorrichtung zur Erfassung des Spektrums elektromagnetischer Strahlung innerhalb eines vorgegebenen Wellenlängenbereichs kann mit Vorteil vorgesehen sein, dass mindestens zwei benachbarte Fenster der zweiten Lochmaske mit jeweils einem Fenster der ersten Lochmaske überlappend angeordnet sind.

Für die Lochmaske der erfindungsgemäßen Vorrichtung kann vorteilhaft gelten, dass mindestens für eine Teilmenge der Fenster gilt, dass jedes dieser Fenster der zweiten Lochmaske mit jeweils einem Fenster der ersten Lochmaske überlappend angeordnet ist.

Unter Umständen ist es möglich, dass das Material der ersten Lochmaske und/oder der zweiten Lochmaske ein Metall oder polykristallines Silizium oder insbesondere silizidiertes polykristallines Silizium aufweist.

Für das Spektrometer kann gelten, dass die strahlungsempfindlichen Sensorelemente jeweils zwei unterschiedliche, elektrisch leitende und in Kontakt miteinander stehende, bei Empfang von elektromagnetischer Strahlung innerhalb des vorgegebenen Wellenlängenbereichs einen veränderbaren elektrischen Parameter (insbesondere erzeugter Strom oder erzeugte Spannung oder elektrischer Widerstand oder Kapazität) erzeugende Materialien aufweisen, wobei die Größe der Parameteränderung von der Intensität der Strahlung abhängig ist.

Was die Lochblende der erfindungsgemäßen Vorrichtung anbelangt, so ist es möglich, dass die ersten und zweiten Fenster der beiden Lochmasken sich jeweils über Flächen erstrecken, die längs zweier zueinander rechtwinkliger Aufspannachsen aufgespannt sind, dass die Abmessungen der ersten und zweiten Fenster in zumindest einer gemeinsamen ersten Achse der beiden Aufspannachsen jeweils von einem ersten und einem zweiten Begrenzungsrand des betreffenden Fensters begrenzt sind, wobei, in einer gemeinsamen ersten Aufspannachse betrachtet, jeder Strahlungsdurchlassschlitz von einem ersten Begrenzungsrand eines ersten Fensters der ersten Lochmaske und einem zweiten Begrenzungsrand eines das erste Fenster überlappenden zweiten Fensters der zweiten Lochmaske begrenzt ist, und dass der erste Abstand der ersten Begrenzungsränder jeweils benachbarter erster Fenster der ersten Lochmaske von dem zweiten Abstand der zweiten Begrenzungsränder jeweils benachbarter zweiter Fenster der zweiten Lochmaske verschieden ist.

Ferner ist es zweckmäßig, wenn die Abmessungen der ersten und zweiten Fenster auch in der gemeinsamen zweiten Achse der beiden Aufspannachsen jeweils von einem dritten und einem vierten Begrenzungsrand des betreffenden Fensters begrenzt sind, wobei, in der gemeinsamen zweiten Aufspannachse betrachtet, jeder Strahlungsdurchlassschlitz von einem dritten Begrenzungsrand des ersten Fensters der ersten Lochmaske und einem vierten Begrenzungsrand eines das erste Fenster überlappenden zweiten Fensters der zweiten Lochmaske begrenzt ist.

Die Sensorelemente können beispielsweise als Fotodioden, insbesondere pn-Dioden, oder als IR-Dioden oder als Thermopile-Elemente ausgebildet sein.

Wie bereits oben angedeutet, ist es möglich, dass die Lochmasken der erfindungsgemäßen Vorrichtung mittels eines Fotolithografie-Prozesses eines Halbleitervorrichtungs-Herstellungsverfahrens wie z. B. eines CMOS-, BICMOS- oder Bipolar-Bauelement-Herstellungsverfahrens gebildet sind.

In weiterer vorteilhafter Ausgestaltung der Erfindung ist vorgesehen, dass der Abstand gleicher Kanten der Fenster der ersten Lochmaske und der Abstand gleicher Kanten der Fenster der zweiten Lochmaske eine gleichbleibende erste Toleranz aufweist und die Positionierung der beiden Lochmasken relativ zueinander eine zweite Toleranz aufweist und die Größe der Fenster jeder der beiden Lochmasken eine dritte Toleranz aufweist und dass die erste Toleranz mathematisch um mindestens eine Größenordnung, vorzugsweise mindestens zwei Größenordnungen kleiner ist als die zweite und/oder dritte Toleranz, wobei die zweite Toleranz insbesondere im Wesentlichen gleich groß ist wie die dritte Toleranz.

Zur Realisierung der Sensorelemente als in den Träger integrierte Strukturen ist es zweckmäßig, wenn in dem Substrat von dessen Oberseite aus ein mit ersten Ladungsträgern von einem ersten Leitungstyp versehenes Gebiet ausgebildet ist, wobei in dem Gebiet mit den ersten Fenstern der ersten Lochmaske fluchtende und innerhalb der Fenster freiliegende Teilgebiete mit zweiten Ladungsträgern von einem dem ersten Leitungstyp entgegengesetzten zweiten Leitungstyp ausgebildet sind, die mit den jeweils angrenzenden Bereichen des Gebiets aus den ersten Ladungsträgern ein Sensorelement, insbesondere eine Fotodiode bilden.

Für die erfindungsgemäße Vorrichtung kann es ferner von Vorteil sein, wenn die beiden Lochmasken aus einem Material bestehen bzw. mit einem Material beschichtet sind, das für die interessierende Strahlung nicht reflektiv und/oder nicht refraktiv und/oder nicht durchlässig ist und/oder absorbierend wirkt.

Wie oben angegeben, handelt es sich bei der Erfindung grundsätzlich um eine Vorrichtung zur selektiven Transmission des Spektrums elektromagnetischer Strahlung innerhalb eines vorgegebenen Wellenlängenbereichs aufgefasst werden. Hierbei kann die Vorrichtung in einer bevorzugten Ausgestaltung der Erfindung versehen sein mit

- einem Substrat,
- einer oberhalb des Substrats angeordneten ersten Blende aus einem für Strahlung innerhalb des vorgegebenen Wellenlängenbereichs undurchlässigen Material,
- einer oberhalb der ersten Blende angeordneten, zweiten Blende aus einem für die Strahlung innerhalb des vorgegebenen Wellenlängenbereichs undurchlässigen Material,
- wobei die Blenden so angeordnet sind dass gegenüberliegende Kanten die Breite eines Strahlungsdurchlassschlitzes zum Durchlassen von Strahlung mit einer innerhalb des vorgegebenen Wellenlängenbereichs liegenden Wellenlänge definieren und
- der Abstand der beiden Kanten so gering ist, dass diese einen Hochpass oder Bandpass für elektromagnetische Strahlung bilden und
- dass die beiden Blenden durch eine im interessierenden Wellenlängenbereich transparente Schicht getrennt sind, deren Dicke kleiner $\lambda/2$ und / oder kleiner $\lambda/4$ ist, wobei $\lambda$ die kleinste Wellenlänge von Interesse ist.

Die Erfindung wird nachfolgend anhand verschiedener Ausführungsbeispiele und unter Bezugnahme auf die Zeichnung näher erläutert. Im Einzelnen zeigen dabei:

Fig. 1              einen Querschnitt durch einen Teil des Aufbaus eines Festkörper-Spektrometers gemäß einem ersten Ausführungsbeispiel,

Fig. 2              einen Querschnitt durch eine abgewandelte Ausführungsform gemäß einem zweiten Ausführungsbeispiel des Spektrometers,

Fig. 3              die Verwendung des Festkörper-Spektrometers gemäß den beiden Ausführungsbeispielen nach den Fign. 1 und 2 in Kombination mit einem Polarisationsfilter,

Fig. 4              andeutungsweise ein weiteres Ausführungsbeispiel eines Spektrometers im Querschnitt mit Thermopile-Elementen als strahlungsselektive Elemente,

Fig. 5              eine Draufsicht auf den vorteilhafterweise vorgesehenen Versatz der Fenster zweier Lochmasken in zwei Dimensionen,

Fig. 6              als Blockschaltbild für eine Beschaltung des Spektrometers zur Auswertung der empfangenen Strahlung,

Fig. 7              ein Beispiel für eine Signalauswertung zur Lieferung der Intensitäten des untersuchten Spektrums,

Fign. 8 und         9 Diagramme zur Verdeutlichung der Grundlagen für die Auswertung der Signale des Spektrometers,

Fig. 10             ein FDTD-Modell eines Schlitzes auf Si-Substrat,

Fig. 11             eine Darstellung der wellenlängenabhängigen Intensität des E-Feldes in Abhängigkeit von der Schlitzbreite,

Fign. 12 und 13     zwei Ausführungsbeispiele für Ausgestaltungen von mikrooptischen Transmissionsvorrichtungen zur Wellenlängenselektion in Anwendung bei einem Spektrometer, und

Fign. 14 bis 30     eine beispielhafte Prozessschrittfolge zur Herstellung einer mikrooptischen Transmissionsvorrichtung in CMOS-Technologie.

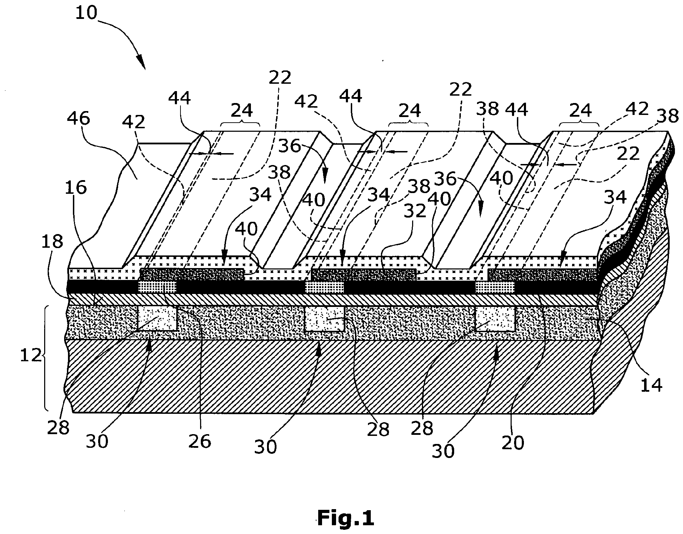

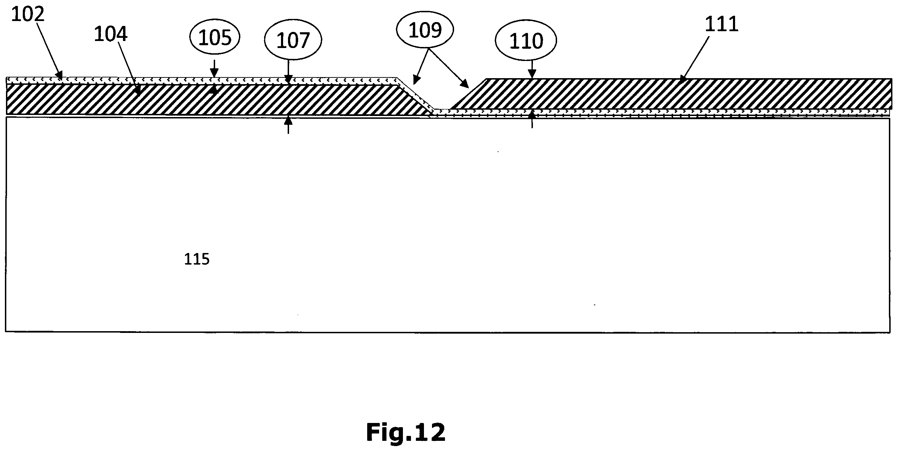

Bevor anhand der Fign. 12 ff auf Ausführungsbeispiele von mikrooptischen Transmissionsvorrichtungen eingegangen wird, soll zunächst anhand der Fign. 1 bis 11 als ein möglicher, nichtsdestotrotz aber bevorzugter Anwendungsfall für eine solche Vorrichtung auf zwei Ausführungsbeispiele eines Festkörper-Spektrometers eingegangen werden.

In Fig. 1 ist perspektivisch und in Schnittansicht ein Teil eines beispielhaften Festkörper-Spektrometers 10 gemäß einem ersten Ausführungsbeispiel gezeigt. Das Festkörper-Spektrometer 10 weist ein im Regelfall schwach p-dotiertes (Silizium-)Halbleitersubstrat 12 auf, in dessen oberflächennahen Bereich ein n-dotiertes (Wannen-)Gebiet 14 implantiert ist. Auf der Oberseite 16 des Halbleitersubstrats 12 befindet sich eine Siliziumoxid-Schicht 18. Auf der Siliziumoxid-Schicht 18 befindet sich eine erste Lochmaske 20 aus beispielsweise polykristallinem Silizium. Diese erste Lochmaske 20 weist erste schmale Fenster 22 mit jeweils gleicher Breite auf. Diese Fenster 22 sind in diesem Ausführungsbeispiel mit einem für die interessierende Strahlung durchlässigen Material 26 ausgefüllt. Das Material der ersten Lochmaske 20 ist für Strahlung im interessierenden Wellenlängenbereich undurchlässig.

Nach dem Aufbringen der ersten Lochmaske 20 (und vor dem Ausfüllen der ersten Fenster 22) wird durch die ersten Fenster 22 hindurch eine p-Implantation vorgenommen, so dass sich in dem n-dotierten Gebiet 14 p-dotierte Bereiche 28 ausbilden. Mithin entstehen pn-Übergänge, die für die interessierende Strahlung sensitive Fotodioden 30 bilden.

Auf der ersten Lochmaske 20 befindet sich eine zweite Lochmaske 32, die beispielsweise aus Metall bzw. einer Metalllegierung besteht und ebenfalls für die Strahlung im interessierenden Wellenlängenbereich undurchlässig ist. Die zweite Lochmaske 32 weist zwischen ihren für die Strahlung undurchlässigen Bereichen 34 zweite Fenster 36 auf. Die zweiten Fenster 36 der zweiten Lochmaske 32 überlappen dabei teilweise die ersten Fenster 22 der ersten Lochmaske 20, wobei gegenüberliegende Längsränder 38,40 der sich überlappenden ersten Fenster 22 der ersten Lochmaske 20 bzw. der zweiten Fenster 36 der zweiten Lochmaske 32 unterschiedlich breite Strahlungsdurchlasschlitze 42 bilden. Dies ist darin begründet, dass der Mittenabstand (Pitch) der gleichmäßig beabstandeten benachbarten ersten Fenster 22 verschieden ist von dem Mittenabstand (Pitch) der ebenfalls gleichmäßig beabstandeten benachbarten zweiten Fenster 36. Dadurch entsteht ähnlich wie bei einem Nonius eine sich von Strahlungsdurchlassschlitz 42 zu Strahlungsdurchlassschlitz 42 verändernde Spaltbreite 44. Durch die Bildung der Strahlungsdurchlassschlitze 42 mittels zweier Lithographie-Ebenen lässt sich die Veränderung der Spaltbreite 44 der nebeneinanderliegenden Strahlungsdurchlassschlitze 42 extrem genau steuern und einstellen. Die Herstellungsgenauigkeit der Kanten 38 zu benachbarten Kanten 38 der Lochmaske 20 bzw. der Kanten 40 zu benachbarten Kanten 40 der Lochmaske 32 ist extrem hoch (bei normalen CMOS-Prozessen beispielsweise im einstelligen nm-Bereich), wohingegen die beiden Toleranzen, was die Größen der ersten bzw. zweiten Fenster 22, 36 sowie die Präzision, mit der ein Fenster 22 der ersten Lochmaske gegenüber einem Fenster 36 der zweiten Lochmaske justiert werden kann, betrifft, um etwa zwei Größenordnungen größer sind, also typischerweise im dreistelligen nm-Bereich liegen. Auf der zweiten Lochmaske 32 befindet sich eine zumindest im interessierenden Wellenlängenbereich strahlungsdurchlässige Passivierungsschicht 46.

Für die hochpräzise Herstellung des Festkörper-Spektrometers gemäß Fig. 1 bzw. gemäß der Erfindung ist auch nicht entscheidend, dass bestimmte Strahlungsdurchlassschlitze 42, d. h. bezüglich ihrer Lage auf dem gefertigten Chip festgelegte Strahlungsdurchlassschlitze 42 die jeweils vorgeschriebenen Spaltbreiten aufweisen. Vielmehr lässt sich das Festkörper-Spektrometer derart herstellen, dass wesentlich mehr Strahlungsdurchlassschlitze mit diesen zugeordneten Fotodioden bzw. strahlungsempfindlichen Elementen hergestellt werden, als benötigt werden. Durch einen der Herstellung nachgeschalteten Prozess werden dann im Rahmen der Kalibration des Festkörper-Spektrometers diejenigen Strahlungsdurchlassschlitze 42 mit den gewünschten Variationen an Spaltbreiten ausgewählt, die für den interessierenden Wellenlängenbereich benötigt werden.

Durch die sich mit gleichbleibendem Pitch in ihrer Spaltbreite ändernden Strahlungsdurchlassschlitze 42 treten nun durch jede dieser Öffnungen unterschiedliche Strahlungsanteile hindurch. Auf die Fig. 1 bezogen bedeutet dies insbesondere, dass durch den links dargestellten Strahlungsdurchlassschlitz 42 Strahlung bis zu einer durch die Spaltbreite 44 dieses Strahlungsdurchlassschlitze bestimmten Wellenlänge hindurchtritt. Durch den mittleren Strahlungsdurchlassschlitz 42 tritt neben Strahlung mit Wellenlängen, wie sie durch den linken Strahlungsdurchlassschlitz treten, weitere Strahlung mit Wellenlängen hindurch, die letztendlich durch die größere Spaltbreite 44 bestimmt ist. (Siehe P. Morse, P.J. Rubenstein; The Diffraction of Waves by Ribbons and by Slits; Physical Review; Vol. 54; Dec. 1st 1938; p. 895-898.) Entsprechend lässt damit der in Fig. 1 rechts gezeigte noch breitere Strahlungsdurchlassschlitz 42 Strahlung mit denjenigen Wellenlängen hindurch, die auch den mittleren Strahlungsdurchlassschlitz 42 passieren, wobei zusätzlich noch Strahlung mit größeren Wellenlängen den rechten Strahlungsdurchlassschlitz 42 passiert.

Dieser Umstand wird, wie später noch beschrieben werden wird, bei der Auswertung der Strahlungsintensitäten innerhalb des interessierenden Spektrums berücksichtigt.

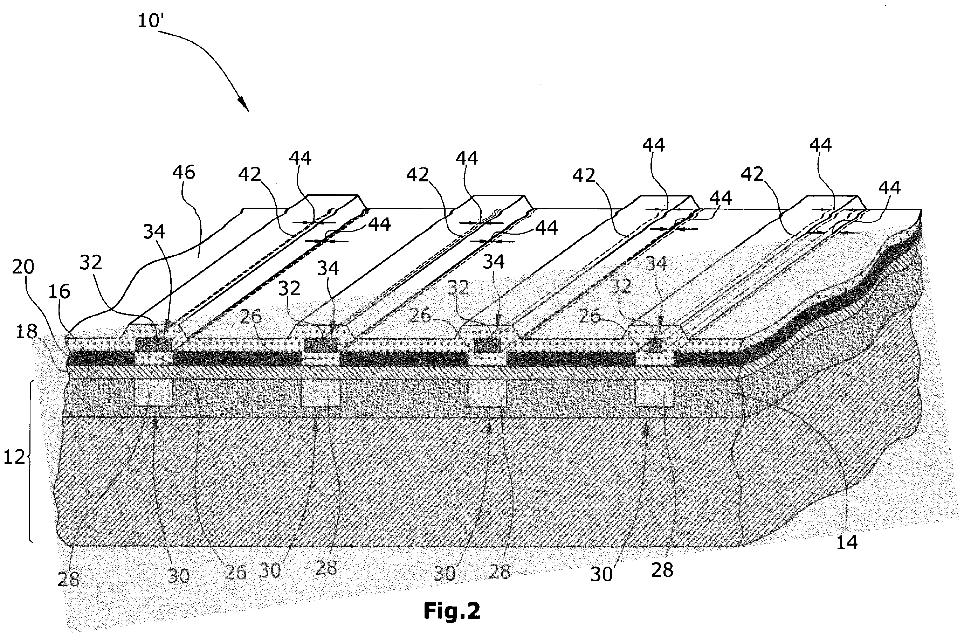

Fig. 2 zeigt ein alternatives Ausführungsbeispiel für ein Festkörper-Spektrometer 10', wobei in Fig. 2 diejenigen Schichten und Elemente, die denjenigen des Spektrometers 10 gemäß Fig.1 entsprechen bzw. gleichen, mit den gleichen Bezugszeichen wie in Fig. 1 versehen sind.

Wie man erkennt, entspricht der Aufbau des Festkörper-Spektrometers 10' einschließlich der ersten Lochmaske 20 demjenigen des Spektrometers 10 der Fig. 1. Im Unterschied zum Spektrometer 10 der Fig. 1 weist die zweite Lochmaske 32 des Spektrometers 10' der Fig. 2 strahlungsundurchlässige Bereiche 34 auf, die mittenzentriert oberhalb der ersten Fenster 22 der ersten Lochmaske 20 angeordnet sind. Beidseitig dieser strahlungsundurchlässigen Bereiche 34 ergeben sich dann spaltförmige Strahlungsdurchlassschlitze 42 mit paarweise jeweils gleichen Spaltbreiten 44.

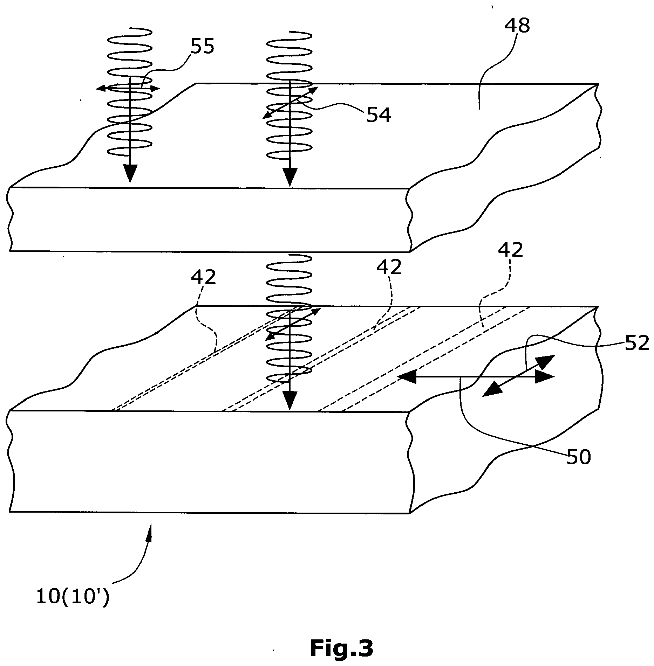

Fig. 3 zeigt schematisch die Verwendung eines Polarisationsfilters 48 in Verbindung mit dem Festkörper-Spektrometer 10 bzw. 10' der Fign. 1 bzw. 2. Die Strahlungsdurchlassschlitze 42 weisen in der (ersten) Aufspannachse 50, in der sich die ersten und zweiten Fenster 22,36 erstrecken, eine sich verändernde Spaltbreite auf (wie oben beschrieben). In der zur ersten Aufspannachse 50 rechtwinkligen verlaufenden Aufspannachse 52 weisen die Strahlungsdurchlassschlitze 42 im Wesentlichen gleiche Abmessungen auf. Die Wellenlängenselektivität entsteht also in der ersten Aufspannachse 50, so dass das Polarisationsfilter 48 für eine entsprechende Filterung der einfallenden zu untersuchenden Strahlung sorgt. Dies ist in Fig. 3 gezeigt. Wird Strahlung mit einem E-Feld-Vektor 54, der in Längserstreckung (Achse 52) der schlitzförmigen Strahlungsdurchlassschlitze 42 verläuft, hindurch gelassen, während Strahlung, deren E-Feld-Vektor 55 in Breitenerstreckung der schlitzförmigen Strahlungsdurchlassschlitze 42 verläuft (siehe Achse 50) blockiert und abgeschirmt wird.

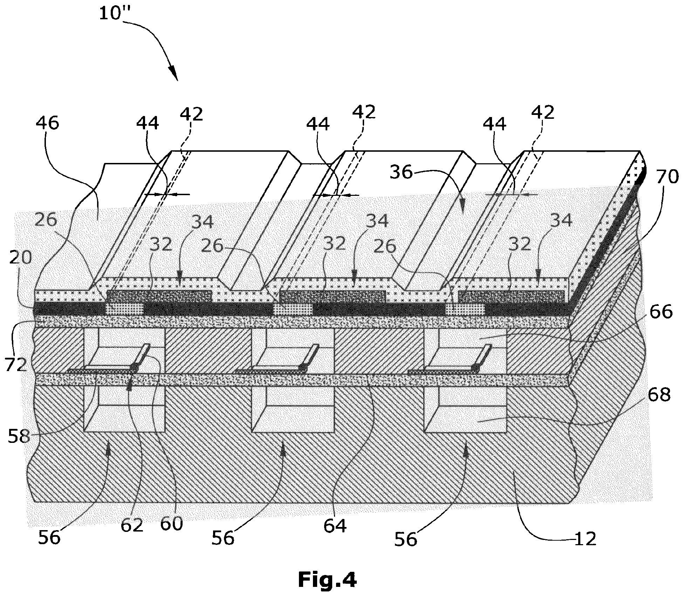

Fig. 4 zeigt ein weiteres Ausführungsbeispiel eines Festkörper-Spektrometers 10", wobei auch hier gilt, dass diejenigen Schichten und Bestandteile, die identisch bzw. funktionsgleich mit denjenigen des Spektrometers 10 gemäß Fig. 1 sind, in Fig. 4 mit den gleichen Bezugszeichen wie in Fig. 1 versehen sind.

Der obere Teil des Festkörper-Spektrometers 10" der Fig. 4 ist identisch mit den oberhalb der Siliziumoxid-Schicht 18 und oberhalb dieser angeordneten Schichten gemäß Fig. 1 (erste und zweite Lochmasken 20,32 sowie Passivierungsschicht 46).

Anstelle der Fotodioden 30 der Festkörper-Spektrometer 10 und 10' der Fign. 1 und 2 sind bei dem Spektrometer 10" gemäß Fig. 4 als strahlungsempfindliche Elemente Thermopile-Elemente 56 vorgesehen. Jedes Thermopile-Element 56 besteht dabei aus zwei Leitern 58,60, die an einem Überkreuzungspunkt 62 elektrisch miteinander in Verbindung stehen. Die beiden Leiter 58,60 weisen Materialien mit unterschiedlicher Austrittsarbeit auf. Hierbei kann es sich beispielsweise um Paarungen von n-dotiertem und p-dotiertem Silizium oder aber von polykristallinem Silizium und Metall (Aluminium) handeln. Auf Grund der unterschiedlichen Austrittsarbeiten kommt es zur Ausbildung einer Thermospannung zwischen den beiden Leitern 58,60 am Ort des elektrischen Kontaktes (Überkreuzungspunkt 62). Die Thermospannung hängt ab von der Temperatur des Kontaktes. Der Überkreuzungspunkt 62 wird im Ausführungsbeispiel gemäß Fig. 4 durch eine (Silizium-)Membran 64, auf der sich die Leiter 58,60 befinden, sowie über das Substrat 12 (unbeabsichtigt) gekühlt. Um diese Kühlung zu minimieren, wird die Membran 64 typischerweise möglichst dünn ausgeführt. Aus dem gleichen Grund, nämlich der Minimierung der Kühlung, werden oberhalb und unterhalb der Membran 64 in dem Substrat 12 Kavitäten 66,68 ausgebildet, die evakuiert sind. Diese Kavitäten 66,68 entstehen beispielsweise durch mikromechanisch vorgefertigte Wafer, die miteinander verbondet, d.h. schmelzkontaktiert werden, wie es von der Fertigung von beispielsweise MEMS-Drucksensoren mit Buried Cavities bekannt ist.

Der obere Wafer 70 ist typischerweise entweder als Isolator gefertigt oder mit einer zusätzlichen in Fig. 4 aus Gründen der Vereinfachung nicht dargestellten Isolationsschicht versehen, um die Leiter 58,60 nicht kurzzuschließen. Die oberen Kavitäten 66 sind durch eine weitere Membran 72 verschlossen, auf der die Lochmasken, wie im Zusammenhang mit Fig. 1 beschrieben, ausgebildet sind.

Der Aufbau gemäß Fig. 4 mit den Thermopile-Elementen 56 als strahlungssensitive Elemente dient insbesondere zur Untersuchung von Spektren im Infrarot-Bereich. Wird das Spektrometer 10" Infrarotstrahlung ausgesetzt, so heizen sich die Thermopile-Elemente 56 solange auf, bis der Wärmeabfluss über das Substrat und der Wärmezufluss durch die Infrarotstrahlung, die wellenlängenselektiv durch die Strahlungsdurchlassschlitze gelangt, im Gleichgewicht sind. Da die Strahlungsdurchlassschlitze wellenselektiv arbeiten, heizen sich die Thermopile-Elemente 56 unterschiedlich stark auf und liefern demzufolge unterschiedliche Thermospannungen, die dann den Wellenlängen der jeweils empfangenen Infrarotstrahlung zugeordnet werden können.

Für die Herstellung der Lochmasken sollten Materialien verwendet werden, die Infrarotstrahlung reflektieren. Daher eignet sich insbesondere Metall (beispielsweise Aluminium), während Silizium beispielsweise ungeeignet ist, da es Infrarotstrahlung mit einer Wellenlänge oberhalb von 1300 nm durchlässt.

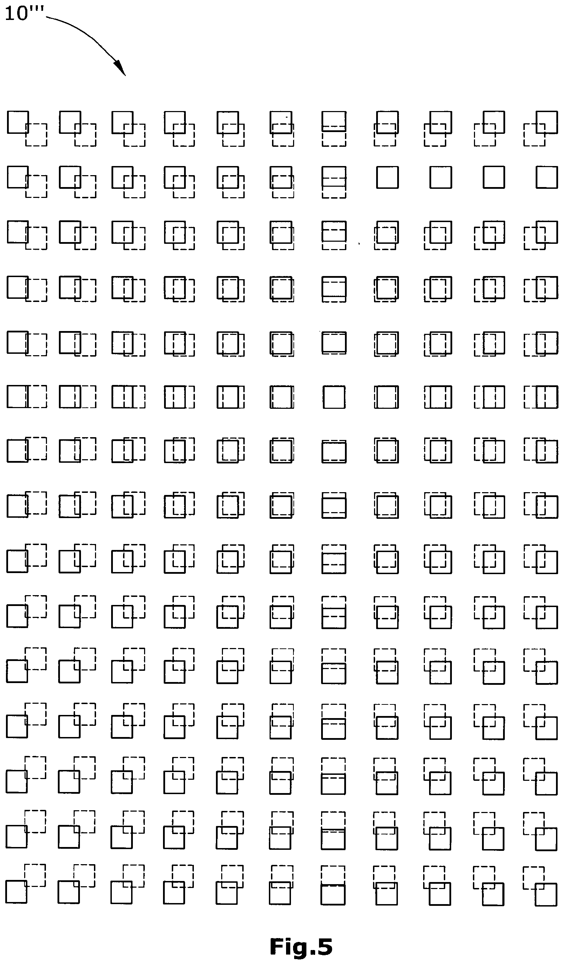

Fig. 5 zeigt eine Draufsicht auf eine Lochmaskenanordnung mit zweidimensionalem Lochmaskenversatz für die Erzeugung von in zwei Dimensionen unterschiedlich großen Strahlungsdurchlassschlitze eines Festkörper-Spektrometers 10''' gemäß einem weiteren Ausführungsbeispiel. Bei einer derartigen Anordnung, bei der sich also die Strahlungsdurchlassschlitze sowohl in der Breite als auch in der Länge um jeweils konstante Beträge ändern (bei Betrachtung benachbarter Strahlungsdurchlassschlitze), kann auf die Polarisationsfilterung der zu untersuchenden Strahlung verzichtet werden.

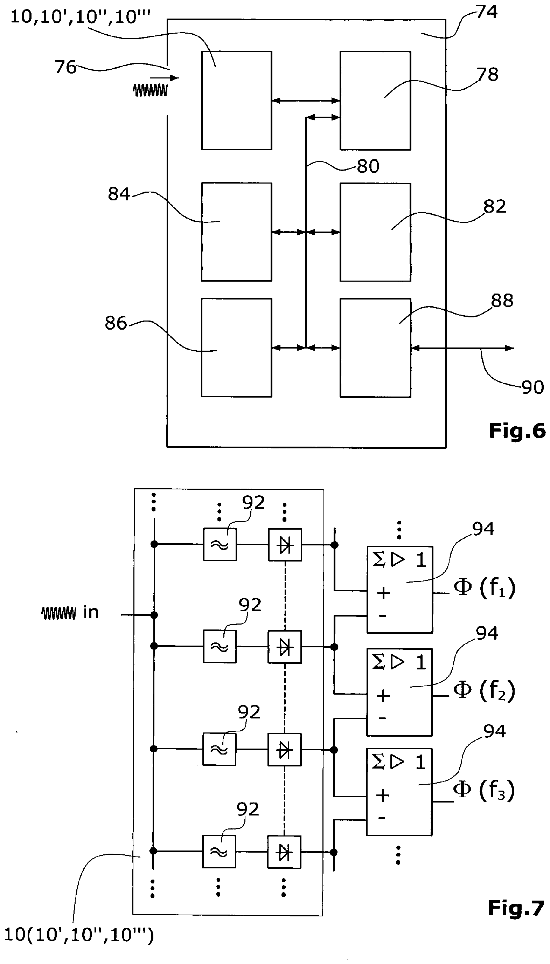

Fig. 6 zeigt schematisch und in Form eines Blockschaltdiagramms eine mögliche Beschaltung eines Festkörper-Spektrometers gemäß einem der zuvor beschriebenen Ausführungsbeispiele zu Kalibrationszwecken. Wie bereits oben erwähnt, kann im Vorhinein nicht zuverlässig ausgesagt werden, dass ein lokal festgelegter Strahlungsdurchlassschlitz des hergestellten Chips auch tatsächlich diejenige Strahlung hindurch lässt, wie es laut Herstellungsprozess und Anordnung des Strahlungsdurchlassschlitzes an sich beabsichtigt ist. Der Herstellungsprozess, nach dem die zueinander ein- oder zweidimensional versetzten Lochmasken erzeugt werden, garantiert, dass auf jeden Fall so viele Strahlungsdurchlassschlitze mit denjenigen Abmessungen erzeugt worden sind, wie sie für den interessierenden Wellenlängenbereich und in der gewünschten Auflösung des Spektrometers erforderlich sind. Das bedeutet, dass man nach der Herstellung diejenigen Strahlungsdurchlassschlitze definieren und identifizieren muss, die zur Untersuchung des interessierenden Spektrums erforderlich sind.

Eine Anordnung, die diese Kalibrierung durchführt, zeigt Fig. 6. Dabei ist mit 10 (bzw. 10', 10" und 10''') das Festkörper-Spektrometer gemeint. Dieses kann in einem Gehäuse 74 untergebracht sein. Dieses Gehäuse 74 weist ein optisches Fenster 76 auf, durch das die zu vermessende Strahlung auf das Spektrometer 10 (10',10",10''') fallen kann. Das optische Fenster muss für die interessierende Strahlung, d.h. zu vermessende Spektrum, durchlässig sein. Es kann ein Polarisationsfilter aufweisen. Ferner kann es nicht interessierende Strahlung und Strahlung mit störenden Raumrichtungen (Polarisation) abschirmen. Die Signale der strahlungsempfindlichen Elemente des Spektrometers 10 (10',10",10"') sind von der spektralen Zusammensetzung der einfallenden Strahlung abhängig.

Gemäß Fig. 6 werden die Ausgangssignale des Spektrometers 10 (10',10",10"') beispielsweise digital gewandelt, und zwar in einem Auswerteschaltkreis 78. Der Auswerteschaltkreis 78 ist in diesem Fall über einen Bus 80 mit einer CPU 82 verbunden. Diese CPU 82 erhält beispielsweise aus einem Speicher 84 Kalibrations- und Programmdaten.

Das abzuarbeitende Programm und die sonstigen fest vorgegebenen Daten werden von der CPU 82 ebenso dem Speicher 84 entnommen, der beispielsweise auch als Festwertspeicher ausgebildet sein kann. Variable Daten werden einem RAM 86 entnommen. Neben der hier beschriebenen Havard-Architektur sind selbstverständlich andere Architekturen wie beispielsweise eine Von-Neumann-Architektur möglich. Die CPU 82 kommuniziert über einen I/O-Schaltkreis 88 mit außerhalb der im Blockschaltbild gemäß Fig. 6 dargestellten Komponenten. Dies geschieht beispielsweise über einen Standardbus 90.

Die einzelnen strahlungsempfindlichen Elemente des Spektrometers 10 (10',10",10"') werden beispielsweise wie in Fig. 7 gezeigt miteinander verschaltet. In Fig. 7 ist ein Beispiel für die Extraktion der Intensitäten der Strahlung bei drei Wellenlängen und unter Verwendung von vier strahlungsempfindlichen Elementen gezeigt.

Gemäß Fig. 7 unterteilt sich die Anordnung in einen optischen linken Teil und einen elektrischen rechten Teil. Die optische Strahlung fällt, wie in Fig. 7 gezeigt, auf das Spektrometer 10 (10',10",10"'). Mit 92 sind die wellenlängenselektiven Filter gemeint, wie sie durch die Lochmaskenanordnung des Spektrometers 10 (10',10",10"') gebildet sind. Die optischen Filter 92 haben einen Hochpass-Charakter. In dem Fig. 7 dargestellten Beispiel soll das oberste optische Filter 92 eine größere Grenzwellenlänge als das nächst untere optische Filter 92 haben. Dieses wiederum hat eine größere Grenzwellenlänge als das nächst untere optische Filter 92 (usw.).

Das verbleibende optische Signal wird durch einen optischen Wandler, nämlich durch die strahlungssensitiven Elemente des Spektrometers 10 (10',10",10"') in ein elektrisches Signal gewandelt. Das strahlungsempfindliche Element kann eine Fotodiode (pn-Diode), ein Thermopile-Element oder aber auch beispielsweise ein CCD-Element sein. Sofern notwendig, werden die Ausgangssignale dieser Elemente verstärkt, was in Fig. 7 nicht gezeigt ist. Die auf diese Weise gewonnenen Intensitätssignale werden auf Subtrahierschaltungen 94 gegeben, in denen durch die Subtraktion ein Differenzsignal mit Bandpass-Charakter in Bezug auf die einfallende Strahlung entsteht.

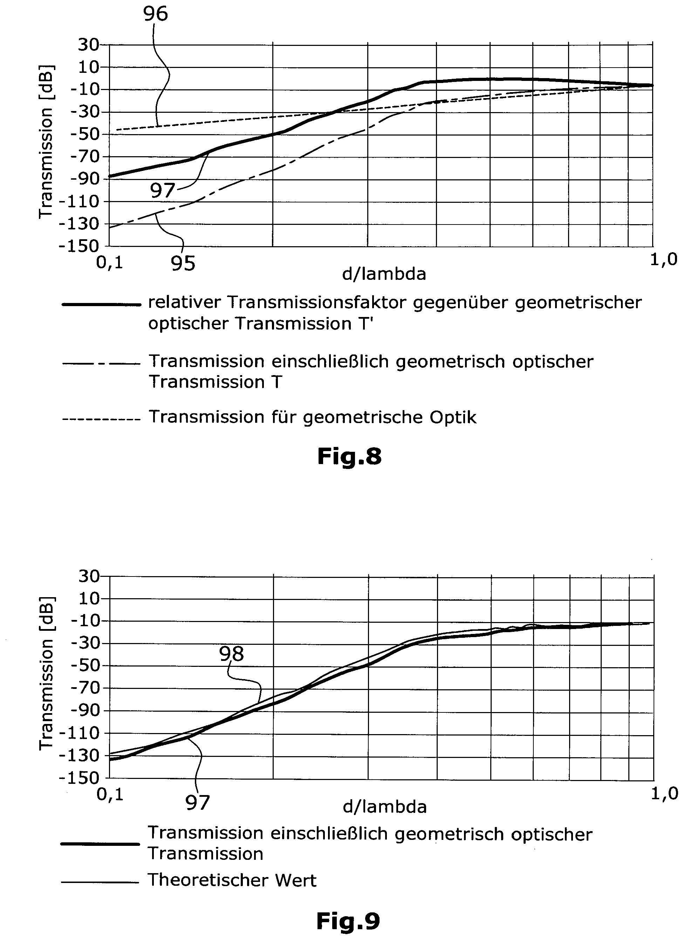

Anhand der Diagramme der Fign. 8 und 9 wird nachfolgend ein Beispiel für die Auswertung der Signale eines (kalibrierten) Festkörper-Spektrometers gemäß beispielsweise einem der Ausführungsbeispiele der Fign. 1, 2, 4 oder 5 beschrieben. Im Nachfolgenden wird ein beispielhaftes Verfahren angegeben, das es ermöglicht, aus den Ausgangssignalen der strahlungsempfindlichen Elemente, also beispielsweise auf die Fign. 1, 2 und 4 bezogen, aus den Dioden- bzw. Thermospannungen $U_i(\lambda)$ ein diskretisiertes Spektrum $S_i(\lambda)$ zu errechnen.

Die Diodenempfindlichkeit $E_i(\lambda)$ kann durch die in Fig. 8a angegebene Funktion für einen idealen Spalt als Strahlungsdurchlassschlitz angenähert werden. Die Werte entstammen der Publikation: P. Morse, P.J. Rubenstein; The Diffraction of Waves by Ribbons and by Slits; Physical Review; Vol. 54; Dec. 1st 1938; p. 895-898.

Der Wert d steht hierbei für die effektive Breite des Schlitzes und $\lambda$ für die Wellenlänge des einfallenden Lichtes. Hierbei wird angenommen, dass die Polarisation des Lichtes so gewählt ist, dass der E-Feld-Vektor parallel zum Schlitz ist. Wird die Wellennatur des Lichtes vernachlässigt, so reduziert sich die Transmission des Lichtes durch den Spalt schon alleine aufgrund der mit schmaler werdendem d geringer werdenden Fläche. Dies ist in Kurve 96 dargestellt. Die Kurve 97 gibt den theoretischen Verlauf der Empfindlichkeit allein infolge der Wellennatur des Lichtes an. Hierbei wird die Reduktion der Transmission aufgrund von Effekten der geometrischen Optik, wie in Kurve 95 dargestellt, noch nicht berücksichtigt. Die Kurve 95 stellt die Kombination beider Effekte, also der Kurven 96 und 97 dar.

Für d>0,4 $\lambda$ folgt die Kurve 95 der Kurve 96. Die Transmission gehorcht für d>0,4 $\lambda$ der geometrischen Optik und ist insofern nicht wellenlängensensitiv. Für d<0,4 $\lambda$ folgt die Kurve einer Kombination der Kurven 97 und 96. In diesem Bereich ist die Kurve wellenlängensensitiv.

Bei diesen Betrachtungen wurde die Wellenlängenabhängigkeit des eigentlichen Fotoelementes - z.B. einer Si-Foto-Diode - vernachlässigt. Für kurze Wellenlängen passiert das Licht also zwar den Spalt; da die Fläche des Spalts jedoch proportional zur Spaltbreite ist, steigt die Empfindlichkeit der Fotodioden proportional zur Spaltbreite.

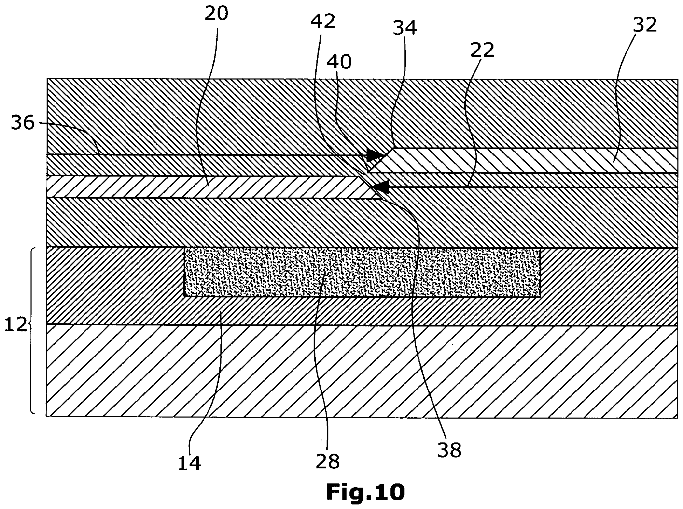

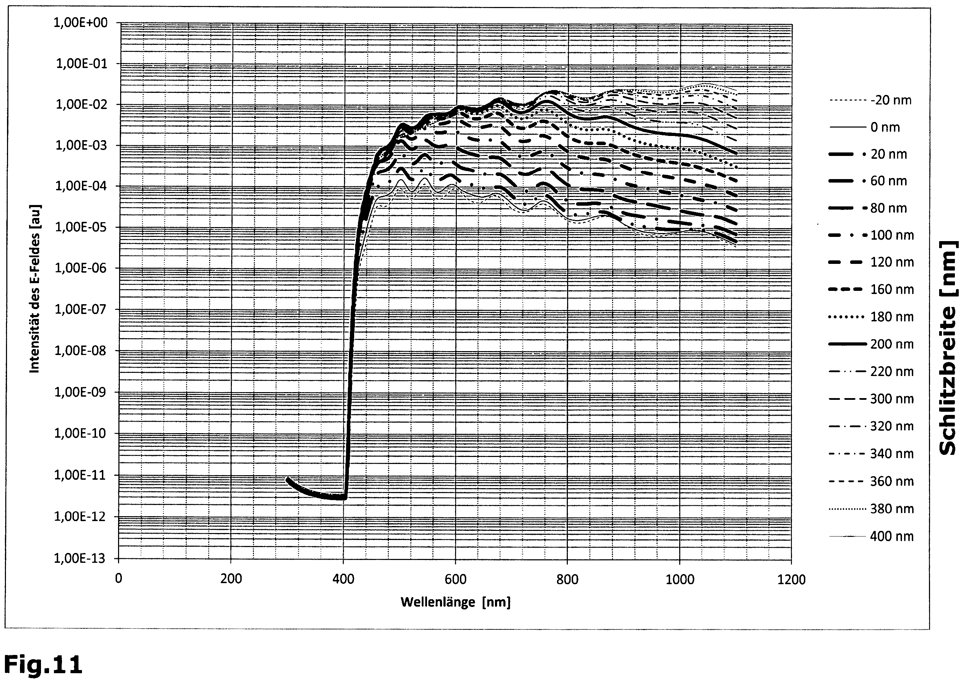

Eine Finite-Discrete-Time-Domain-(FDTD-)Simulation ergibt bei geeigneter Konstruktion z.B. entsprechend Fig. 10 und geeigneter Gestaltung aller Materialen eine Wellenlängenempfindlichkeit wie in Fig. 11 dargestellt. Aufgrund der Ausprägung des Fensters breiten sich die Wellen nach dem Durchtritt durch den Strahlungsdurchlassschlitz 42 zwischen den beiden Lochmasken 20, 32 im Substrat schräg aus. Dies gilt typischer Weise für alle Blenden mit Unterkanten auf unterschiedlichen Ebenen. In Fig. 10 ist zu erkennen, dass die einander gegenüberliegenden, einen Strahlungsdurchlassschlitz 42 definierenden Ränder 38, 40 der Fenster 22, 24 der beiden Lochmasken 20, 32 gegensinnig angeschrägt sind, wobei die Wahl der Orientierung der Anschrägungen (in der Lochmaske 32 nach oben rechts gerichtet und in der Lochmaske 20 nach unten rechts gerichtet - bezogen auf die Darstellung in Fig. 10) auch vertauscht sein kann. Entscheidend dabei ist, dass die Anschrägungen der besagten Ränder 38, 40 nicht parallel sondern in einem Winkel ungleich 0° verlaufen. Dies vermeidet eben jene Interferenzen und Resonanzen, die im Stand der Technik, beispielsweise in US-A-2006/0044429, zur Erzeugung der Wellenlängenabhängigkeit genutzt werden, die aber für die Anwendung bei dem hier beschriebenen Festkörper-Spektrometer eher kontraproduktiv sind. Ein fachkundiger Experte wird deshalb stets versuchen, die in Fig. 11 erkennbare Restwelligkeit für die Wellenlängenempfindlichkeit des optischen Filters, die auf eben jene parasitären Resonanzen zurückzuführen ist, durch geeignete Simulationen, beispielsweise mittels FDTD-Simulation, und Konstruktions- und Materialanpassungen bereits in der Konstruktionsphase zu minimieren und dem Verlauf in Fig. 8 anzunähern.

Um die spätere Charakteristik eines ganzen Spektrometers berechnen zu können, ist es zunächst notwendig, die Charakteristik einer einzelnen Diode anzugeben.

Für kurze Wellenlängen $\lambda_e$ der einfallenden Strahlung hängt das Ausgangssignal der i-ten Diode proportional von der Spaltbreite $d_i$ derselben ab. Bei diesen kurzen Wellenlängen kann man also davon ausgehen, dass keine Abhängigkeit der Transmission durch den Spaltfilter von $\lambda_e$ vorliegt.

Diese Abhängigkeit besteht nur auf Grund der von der Spaltbreite $d_i$ und der Spaltlänge $l_i$ abhängigen Spalt-öffnungsfläche $A_i=d_i*l_i$, die proportional zu $d_i$ mehr oder weniger Licht durchlässt.

Wird durch das einfallende Licht der Wert $\lambda_e > 2,5*d_i$ überschritten bzw. ist $d_i$ kleiner als $\lambda_e*0,4$, so wird die Transmission durch den Spaltfilter gedämpft.

Diese Dämpfung $d(\lambda)$ beträgt in dem Bereich langer Wellenlängen mit $\lambda_e > 2,5*d_i$: $-290dB*(d_i/\lambda_e)$.

Eine solche Dämpfung entspricht einer Funktion:

$$D_i(\lambda_e) = \left(1 - \frac{1}{1+\frac{d_i}{\lambda_{ej}}}\right) * D_{0j} = \left(1 - \frac{1}{1+\frac{\lambda_{ej}}{d_i}}\right) * D_{0j}$$

Hierbei stehen

$\lambda_e$ für die Wellenlänge der einfallenden Strahlung,

$\lambda_{ej}$ für die j-te Wellenlänge eines Paketes einfallender Strahlung aus diskreten Einzelwellenlängen,

$D_{0j}$ für das Sensorsignal bei Bestrahlung mit dieser j-ten Wellenlänge (dies spiegelt die Charakteristik des Senso-relementes wieder) und

$d_i$ für die Spaltbreite des i-ten Elementes (hierbei wird angenommen, dass alle Sensorelemente gleich sind).

Diese Formel wird im Folgenden Hochpass-Näherung genannt.

In Fig. 9 ist die Kurve der Fig. 8 im Vergleich zum theoretischen Verlauf 98 dargestellt.

Wie zu erkennen ist, nähert die Hochpass-Näherung das Verhalten bei polarisationsrichtiger Bestrahlung sehr gut an. Somit ergibt sich für ein diskretes, einfallendes Spektrum S bestehend aus Intensitäten $S_i$ der Einzelwellenlängen $\lambda_{ej}$:

$$S = \sum_{i=1}^{n} S_i(\lambda_{ei})$$

ein Gesamtdiodensignal von:

$$D_j = \sum_{i=1}^{n} \left(\frac{1}{1+\frac{\lambda_{ei}}{d_j}}\right) * D_{0i} * S_i(\lambda_{ei})$$

Offensichtlich kann diese Gleichung in eine Matrizengleichung umgewandelt werden, und zwar mit

$$\vec{D} = \left(D_1(S), D_2(S), D_3(S), \ldots D_{n-1}(S), D_n(S),\right)$$

und

$$\vec{S} = \left(S_1(\lambda_{e1}), S_2(\lambda_{e2}), S_3(\lambda_{e3}), \ldots S_1(\lambda_{e(n-1)}), S_1(\lambda_{en}),\right)$$

und

$$\ddot{A} = \begin{pmatrix} A_{11} & A_{12} & A_{13} & . & . & A_{1(n-1)} & A_{1n} \\ A_{21} & A_{22} & A_{23} & . & . & A_{1(n-1)} & A_{1n} \\ A_{31} & A_{32} & A_{33} & . & . & A_{1(n-1)} & A_{1n} \\ . & . & . & . & . & . \\ . & . & . & . & . & . \\ A_{(n-1)1} & A_{(n-1)2} & A_{(n-1)3} & . & . & A_{(n-1)(n-1)} & A_{(n-1)n} \\ A_{n1} & A_{n2} & A_{n3} & . & . & A_{n(n-1)} & A_{nn} \end{pmatrix}$$

und mit

$$A_{ij} = \left( \frac{1}{1 + \dfrac{\lambda_{ei}}{d_j}} \right) * D_{0i}$$

In dem Fall lässt sich diese Gleichung für die Gesamtdiodensignale schreiben als:

$$\vec{D} = \ddot{A} * \vec{S}$$

Es ist offensichtlich, dass diese Gleichung durch Multiplikation mit der zu A inversen Matrix A$^{-1}$ von links gelöst werden kann:

$$\ddot{A}^{-1} * \vec{D} = \ddot{A}^{-1} * \ddot{A} * \vec{S} = \vec{S}$$

Voraussetzung für die Existenz dieser Matrix ist, dass sie regulär ist. Das bedeutet, dass ihr Rang gleich der Anzahl der Dioden und Spektralkomponenten n ist. Dies ist der Fall, wenn jeder Zeilenvektor zu jedem anderen Zeilenvektor bzw. jeder Spaltenvektor zu jedem anderen Spaltenvektor nicht kolinear ist.
Diese geforderte Regularität der n x n Matrix wird technisch durch n Spaltblenden (42) mit n unterschiedlichen Spaltbreiten (44) oberhalb der n Sensorelemente (30) in vorhersagbarer Weise erreicht. Durch diese Vorhersagbarkeit reduziert sich der Kalibrationsaufwand erheblich.
Im Folgenden wird anhand der Fign. 12 bis 31 das herzustellende Sensorelement mit zugehöriger Strahlungsdurchlassschlitzöffnung und der Prozess zu dessen Herstellung diskutiert.
Fig. 12 zeigt die grundlegende Konstruktion einer mikrooptischen Vorrichtung mit einer Lochblende, die Wellenlängen kleiner gleich einer interessierenden Wellenlänge hindurchlässt, und zwar weitestgehend störungs- und resonanzfrei.

Auf einen Träger, beispielsweise einen Glas- oder Silizium-Wafer 115, wird eine erste optische Maske 104 gefertigt. Diese wird mit einer Kante 109 versehen. Die Herstellung der Kante 109 erfolgt vorzugsweise fotolithografisch und zweckmäßigerweise in der Art, dass die Kante 109 nicht rechtwinklig, sondern so, wie in der Fig. 12 dargestellt, angeschrägt ist. Dies hat den Zweck, dass die Bildung eines Resonators mit der Kante der zweiten Blende, die später beschrieben wird, vermieden oder der Resonator, wenn er denn nicht gänzlich vermeidbar ist, zumindest mit einer erhöhten Dämpfung versehen werden kann, indem Reflektionen an den Kanten der Blenden von dem Wafer 115 weggerichtet sind, der reflektierte Strahlungsanteil also die Transmissionsvorrichtung nicht passiert.

Auf der ersten Blende sowie dem Wafer 115 wird eine im interessierenden Wellenlängenbereich transparente Dielektrizitätsschicht 102 aufgebracht. Die Dicke 105 dieser Schicht 102 wird vorzugsweise so gewählt, dass diese kleine als $\lambda/2$, besser kleiner als $\lambda/4$ ausgeführt ist, um die Ausbildung eines horizontalen Wellenleiters zu verhindern. Ein solcher Wellenleiter würde durch zusätzliche konstruktive und destruktive Resonanzen die spektralen Eigenschaften gegenüber dem gewünschten Tiefpassverhalten des sich später ergebenden Schlitzes verändern, was in der Regel negativ wäre. Auf dieser Schicht 102 wird wiederum vorzugsweise fotolithografisch eine weitere Blende 111 mit einer weiteren Kante 109 gefertigt. Auch diese Kante 109 wird wieder vorzugsweise angeschrägt, um Resonanzen mit der zuvor beschriebenen Kante 109 der ersten Blende zu vermeiden oder zu verringern.

Im Idealfall sind die beiden Blenden 111 und 104 aus einem Material gefertigt, das gut das Licht im interessierenden Wellenlängenbereich absorbiert. Ein solches Material wäre beispielsweise Graphit oder ein schwarzer DLC-Film für den optischen Bereich. In der Regel sind solche Materialien jedoch nicht CMOS kompatibel. Es hat sich gezeigt, dass die Verwendung von Titan anstelle von Aluminium hier die Ergebnisse zumindest verbessert.

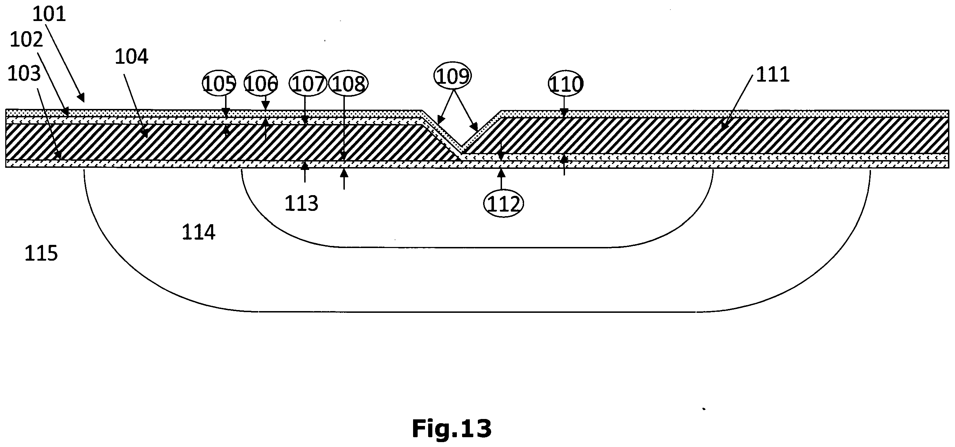

Fig. 13 zeigt ein beispielhaftes herzustellendes strahlungssensitives Bauelement und eine zugehörige modifizierte Strahlungsdurchlassschlitzöffnung basierend auf der Grundstruktur aus Fig. 12. Als Beispiel für ein Bauteil, auf das die die Durchlassschlitzöffnung passierende Strahlung auftrifft, sei ein strahlungssensitives Bauelement in Form eines in diesem beispielhaften Fall pn-Übergangs zwischen einem p-Gebiet 113 und einer n-Wanne 114 im Wafer 115 betrachtet. Die n-Wanne 114 ist in dem p-grunddotierten Wafer 115 (Basissubstrat) eingebracht. Auf diesen ist nun zur Isolation gegenüber der Blende bestehend aus 104 und 111 eine möglichst dünne optisch transparente Isolatorschicht, z. B. eine dielektrische, erste Schicht 103 beispielsweise als $SiO_2$-Schicht , aufgebracht. Untersuchungen haben gezeigt, dass es zweckmäßig ist, auch die Dicke 108 bzw. 112 dieser ersten Schicht 103, möglichst dünn, insbesondere dünner als $\lambda/2$ besser dünner als $\lambda/4$ der kürzesten zu detektierenden Wellenlängen $\lambda$ zu wählen. In einer beispielhaften Realisierung ist diese Dicke 108 bzw. 112 kleiner oder gleich 70nm gewählt. Der Vorteil dieser dünnen ersten (Oxid-)Schicht 103 ist, dass sie wie bei der oben in Zusammenhang mit Fig. 12 beschriebenen Schicht 102 eine Fortpflanzung von elektromagnetischen Wellen in lateraler Richtung unterbindet, wenn die minimale Wellenlänge $\lambda$ nicht unterschritten wird. Werden auf/in einem Substrat mehrere strahlungsempfindliche Bauteile angeordnet (wie dies z. B. bei einem Festkörperspektrometer der oben anhand der Fign. 1 bis 11 beschrieben ist, der Fall ist), so werden diese strahlungsempfindlichen Bauelemente voneinander separiert/optisch entkoppelt. Außerdem werden unerwünschte Resonanzüberhöhungen und -dämpfungen vermieden.

Auf dieser $SiO_2$-Schich 103 ist wie zuvor ein erster Absorber 104 aufgebracht. Aufgrund der in CMOS Linien zur Verfügung stehenden Prozesse hat es sich als günstig erwiesen, diesen Absorber 104 aus Titan herzustellen. Andere Materialien sind denkbar. Besonders günstig wäre beispielsweise, wie bereits erwähnt, Graphit oder ein DLC Film. Die Dicke 107 des ersten Absorbers 104 wird so gewählt, dass Licht diesen Adsorber 104 nicht mehr in signifikanter Menge passieren kann. Ist der Absorber 104 zu dünn (siehe seine Dickenerstreckung 107), so wird das Messergebnis später durch einen Gleichwert überlagert. Für Titan hat es sich als günstig erwiesen, eine Mindestdicke 107 von 250nm, besser 300nm zu wählen. Titan hat den Vorteil, dass es insbesondere im blauen UV-nahen Bereich stärker absorbiert.

An der Strahlungsdurchlassschlitzöffnung kann durch einen geeignet gewählten Ätzprozess die Kante 109 des Absorbers 104 angeschrägt werden. Dies führt, wie bereits beschrieben, zu Vermeidung bzw. Verminderung einer Resonanz mit der Kante 109 des zweiten Absorbers 111.

Auf den ersten Absorber 104 wird eine dünne, optisch transparente und dielektrische (zweite) Zwischenschicht 102, vorzugsweise wieder aus $SiO_2$, aufgebracht. Wie zuvor wird deren Dicke 105 wieder im Bereich $<\lambda/2$ besser $<\lambda/4$ gewählt, beispielsweise <70nm, um eine Wellenausbreitung durch Wellenleitung in der Oxidschicht zu verhindern. Hierbei ist zu sagen, dass die Strukturierung des ersten Absorbers 104 zu einer Abdünnung der ersten (Oxid-)Schicht 103 im Bereich der nach der Strukturierung offenen Flächen führt. Hierdurch wird dort die ursprüngliche Dicke 112 der ersten Schicht 103 typischerweise auf Werte beispielsweise um 20nm reduziert. Nach dem Auftragen der zweiten (Zwischen-)Oxidschicht 102 ist die Gesamtdicke der Doppelschicht aus ausgedünnter erster Schicht 103 und zweiter Schicht 102 unter dem zweiten Absorber 111 und oberhalb des Substrates 115 im Bereich von ca. 90nm. Sofern sich hierdurch Probleme mit einer Wellenfortpflanzung in Richtung eines anderen fotosensitiven Elementes durch Wellenleitung ergeben sollten, so sollte die zweite Oxidschicht 102 dünner ausgeführt werden.

Zurückkommend auf Fig. 13, wird auf die zweite (Oxid-)Schicht 102 als Maske der zweite Absorber 111 abgeschieden und fotolithografisch strukturiert. Auch dieser zweite Absorber 111 wird typischerweise aus dem gleichen absorbierenden Material wie der erste Absorber 104 gefertigt. Die Kanten 109 der beiden Absorber bilden, wie zuvor beschrieben, die Strahlungsdurchlassschlitzöffnung. Der Ätzprozess kann wieder wie zuvor so ausgeführt sein, so dass die Absorber-Kante 109 beispielsweise durch Abschrägung keinen Resonator mit der gegenüberliegenden Kante 109 des ersten Absorbers bildet.

Durch eine abschließende $Si_3N_4$-Schicht 101 wird die Vorrichtung passiviert (versiegelt) und gegen Feuchtigkeit geschützt. Sofern das Bauteil anderweitig hermetisch versiegelt aufgebaut werden kann, kann auf die Passivierungsschicht 101 verzichtet werden, da diese eventuell zu weiteren Resonanzen führen kann, die störend wirken können.

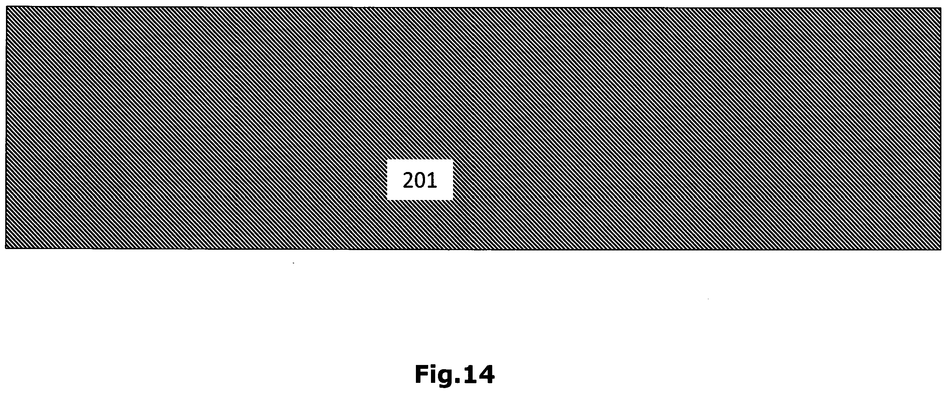

Anhand der nachfolgendend beschriebenen Fign. 14 bis 30 wird der Prozess zur Herstellung einer entsprechenden beispielhaften Vorrichtung auf Silizium-Basis erläutert.

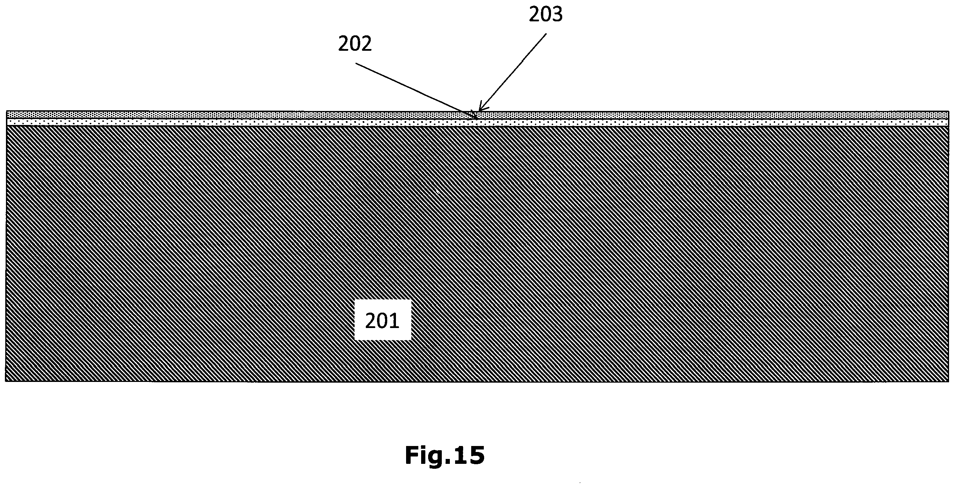

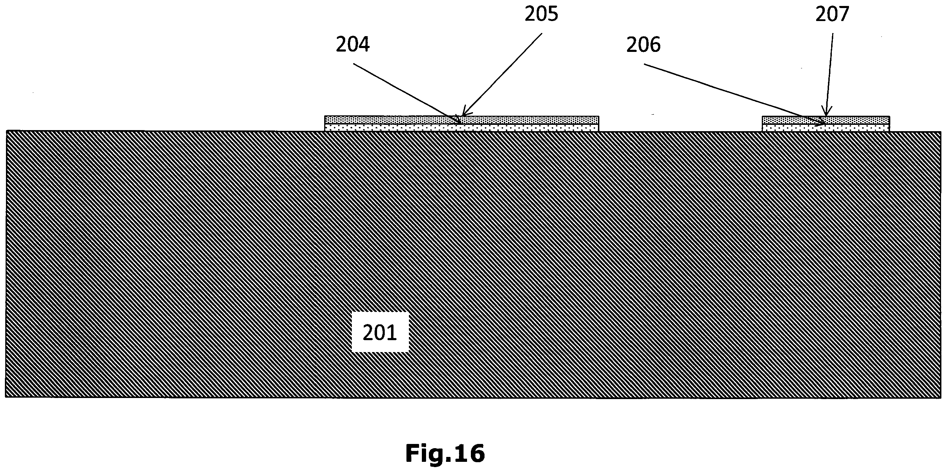

Der Basiswafer 201, beispielsweise eine p-dotierter Silizium-Wafer mit einem Leitwert von 10Ωcm und mit einer 15μm Epi-Schicht mit einer Dotierung von $1,3*10^{15}cm^{-3}$, wird zunächst mit CMOS-üblichen Prozessen gereinigt und markiert (Fig. 14). Im nächsten Schritt (Fig. 15) wird zu Herstellung einer Hard-Maske beispielsweise ein dünnes thermisches Oxid von 15nm 202 erzeugt. Auf dieses wird eine dünne $Si_3N_4$-Schicht 203 von beispielsweise 150nm aufgebracht. Es folgt eine fotolithografische Strukturierung dieser beiden Schichten. Es entstehen zu einen Inseln, die das Aktivgebiet des später zu erzeugenden fotoempfindlichen Sensorelements markieren 204, 205 und eine Maskierung der späteren Kontaktgebiete 206, 207 (Fig. 16).

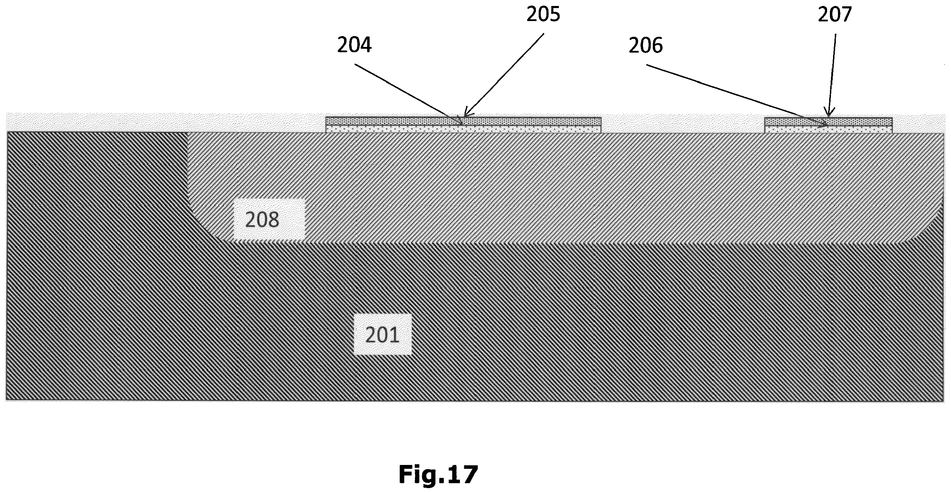

Mit Hilfe einer weiteren Fototechnik wird durch Implantation die spätere n-Wanne 208 in das Substrat 201 eingebracht. Es wird dabei durch die Hard-Masken 204, 205 hindurch implantiert. Eine beispielhafte Dosis ist $3*10^{12}cm^{-2}$ P. (Fig. 17).

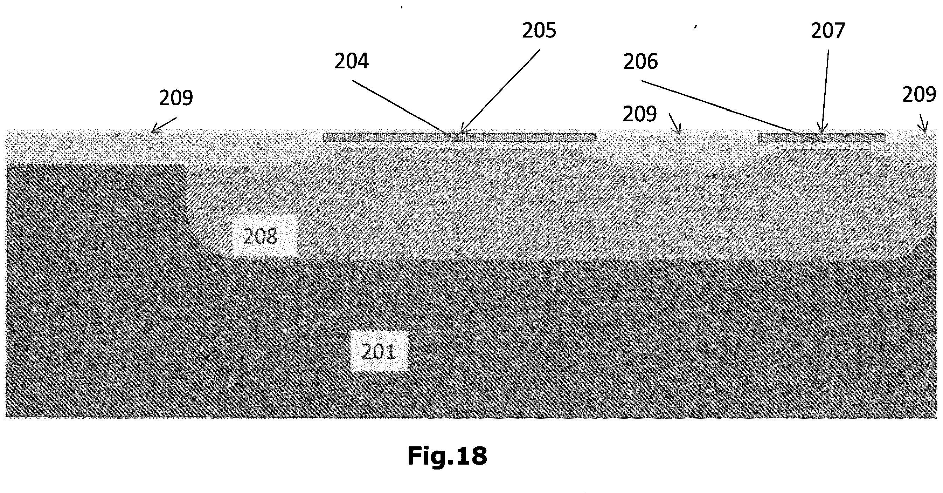

In einem thermischen Ofenprozess werden die freiliegenden Flächen thermisch oxidiert (Fig. 18). Es entstehen Feld-Oxid Bereiche 209, die zur Unterdrückung parasitärer MOS Transistoren dienen (Fig. 18). Eine typische Dicke des Feldoxids ist 300nm. An den mit den Hard-Mask-Bereichen bedeckten Oberflächen des Wafers entsteht kein wesentliches zusätzliches Oxid.

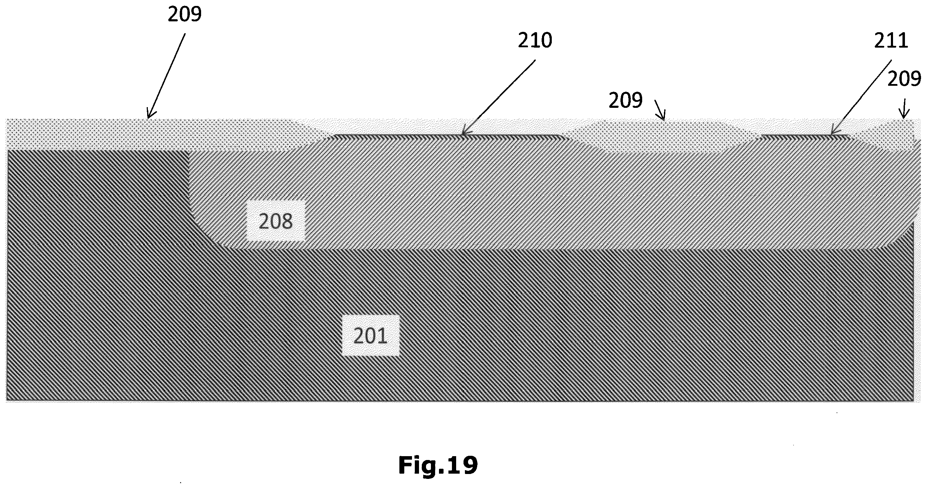

In einem weiteren Ätzschritt werden die Hard-Masken 204, 205 entfernt. Es bleiben die Fenster im Feld-Oxid 209 für das fotoempfindliche Bauelement 210 und die Kontakte 211 zurück. (Fig. 19)

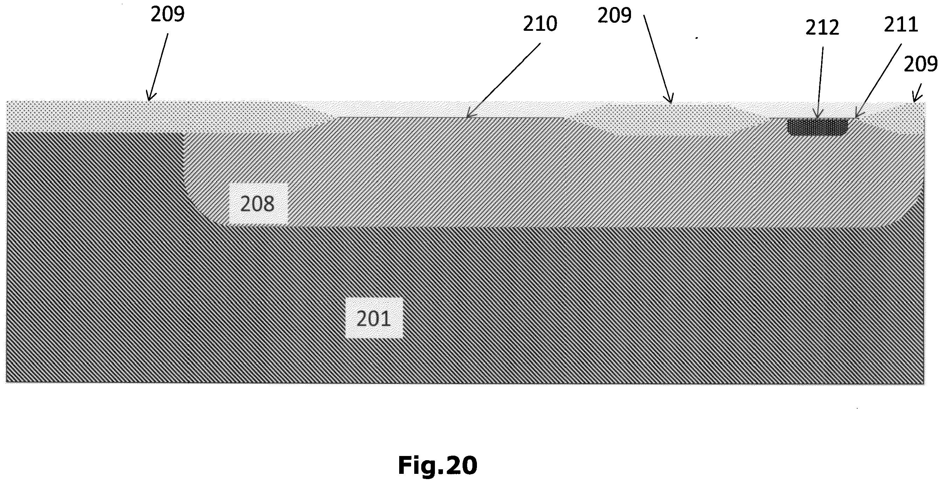

Mit Hilfe einer weiteren Fototechnik wird der Kontakt zur n-Wanne 212 durch Implantation hergestellt. Eine beispielhafte Dosis ist. $5*10^{15}cm^{-2}$ Phosphor. (Fig. 20)

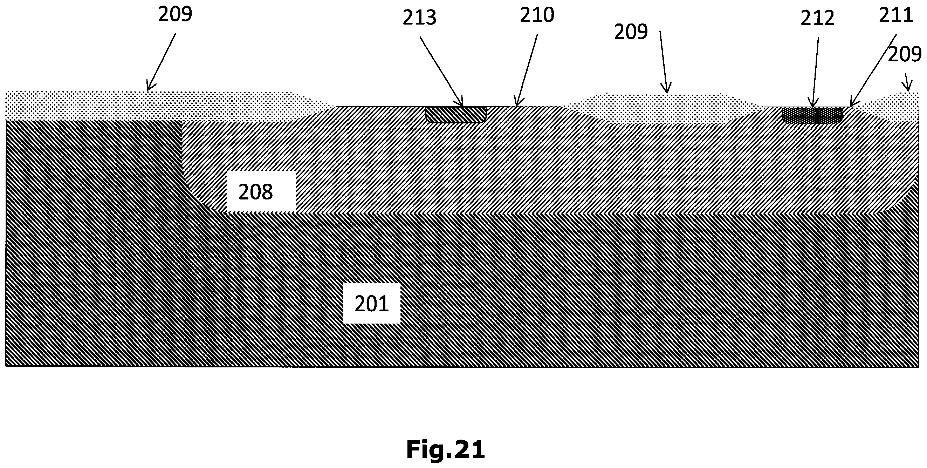

Mit Hilfe einer weiteren Fototechnik wird das p-Gebiet des fotoempfindlichen Bauelements 213 durch Implantation hergestellt. Eine beispielhafte Dosis ist. $1*10^{15}cm^{-2}$ Bor (Fig. 21) Der spätere Kontakt zu diesem Teil wird in dem gleichen Schritt wie der Kontakt zur n-Wanne. Zur besseren Übersichtlichkeit ist dieser Kontakt in dieser Figurenfolge nicht gezeichnet.

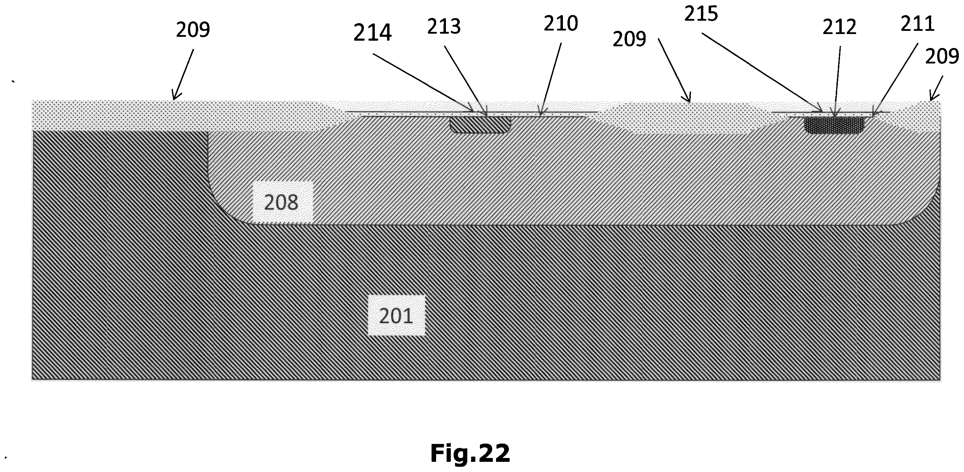

Nach einem Reinigungsschritt wird sowohl in dem Fenster für die Realisierung des fotoempfindlichen Bauelements 214 als auch in den Kontaktfenstern 215 das dünne Oxid abgeschieden. Diese Oxidschichten entsprechen den zuvor erwähnten Oxiden 103 und (102) (Fig. 22) Die Dicke dieses Oxids sollte kleiner als λ/4 betragen. Beispielsweise sind Dicken kleiner als 70nm günstig. Solche Herstellungsprozesse sind aus der Fertigung von Gate-Oxiden bekannt.

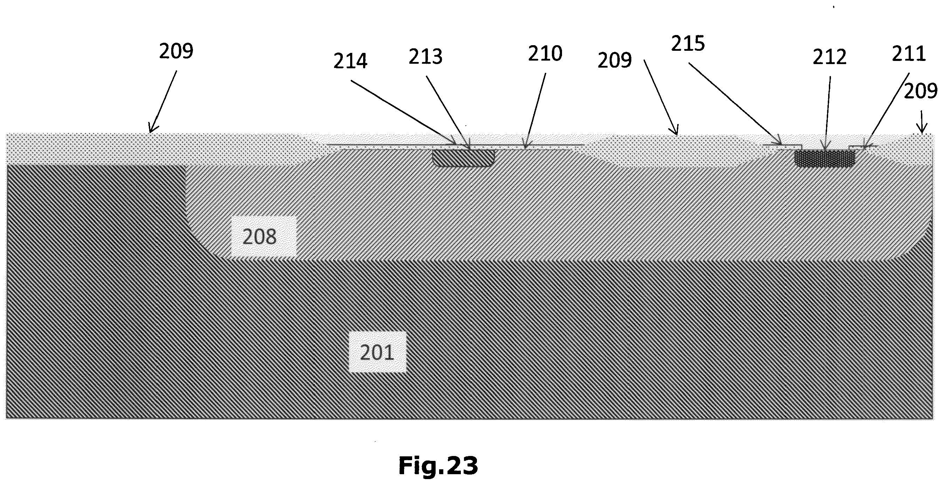

Um eine Kontaktierung zu ermöglichen werden in den Oxiden in den Kontaktbereichen (215) die Kontaktfenster durch eine Fototechnik geätzt. (Fig. 23).

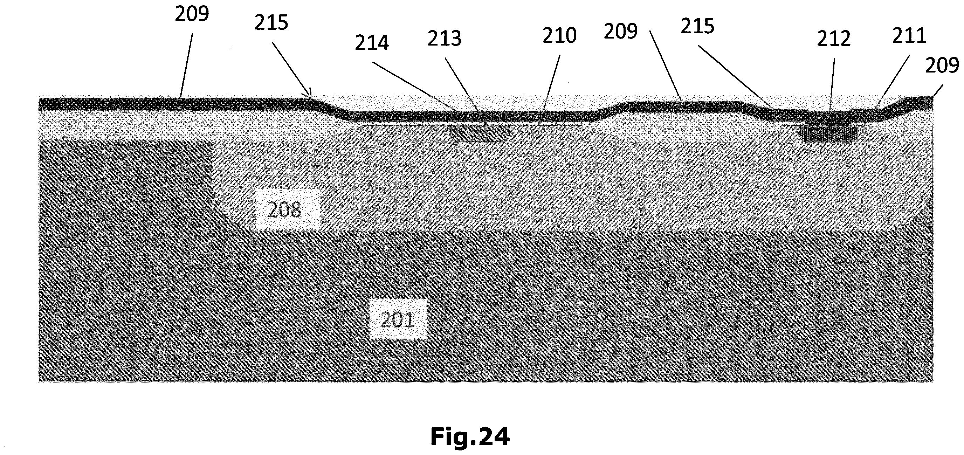

Im nächsten Schritt wird die erste Absorberschicht 216 abgeschieden. Dies geschieht vorzugsweise als Deposition einer 350nm Ti Schicht (Fig. 24).

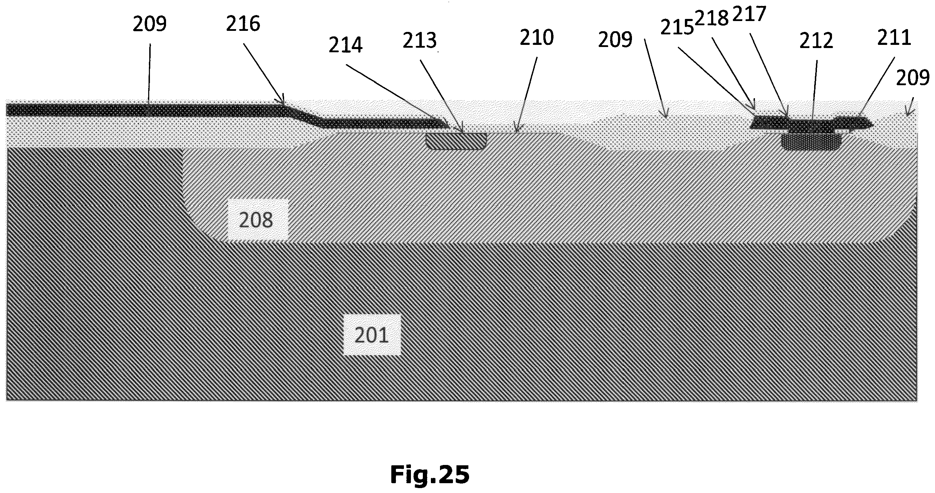

Als nächstes wird diese Schicht mit Hilfe einer Fototechnik gefolgt von einer Metallätzung strukturiert. Es entstehen der erste Absorber 216 und die Kontaktflächen 217. Die Kontaktfläche zum p-Bereich 213 ist zur Übersichtlichkeit nicht gezeichnet. Auf diese wird eine dünne Oxidschicht 218 abgeschieden (Fig. 25). Die Oxidschicht 218 sollte wieder eine Dicke kleiner als λ/4 haben. Diese Schicht entspricht der Schicht 102. Die Ätzung wird vorzugsweise so durchgeführt, dass die Kanten vorzugsweise 45° geneigt sind. Es hat sich erwiesen, dass Neigungen von kleiner 80° bereits hilfreich sind. (siehe auch 109 in Fign. 12 bis 14).

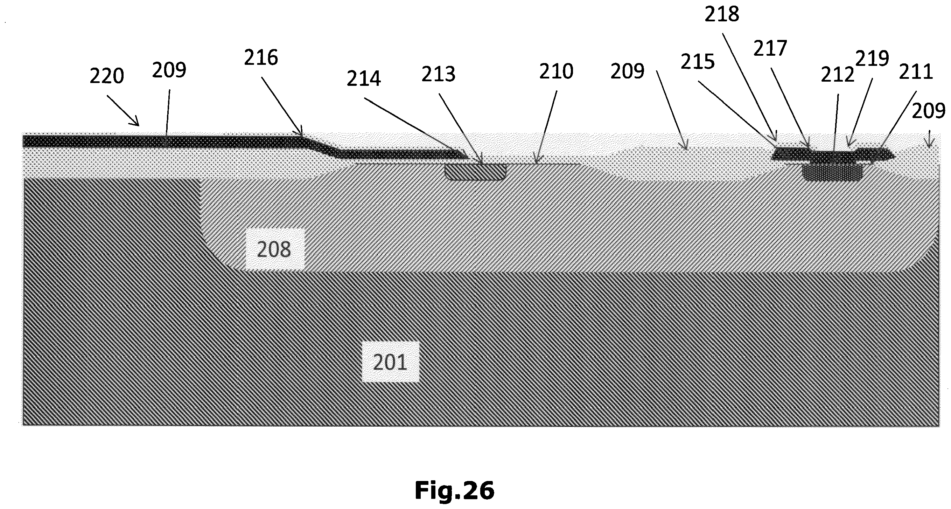

Durch eine weitere Fototechnik gefolgt von einer Oxidätzung werden die späteren Kontaktfenster 220, 219 im Oxid 218 geöffnet. (Fig. 26).

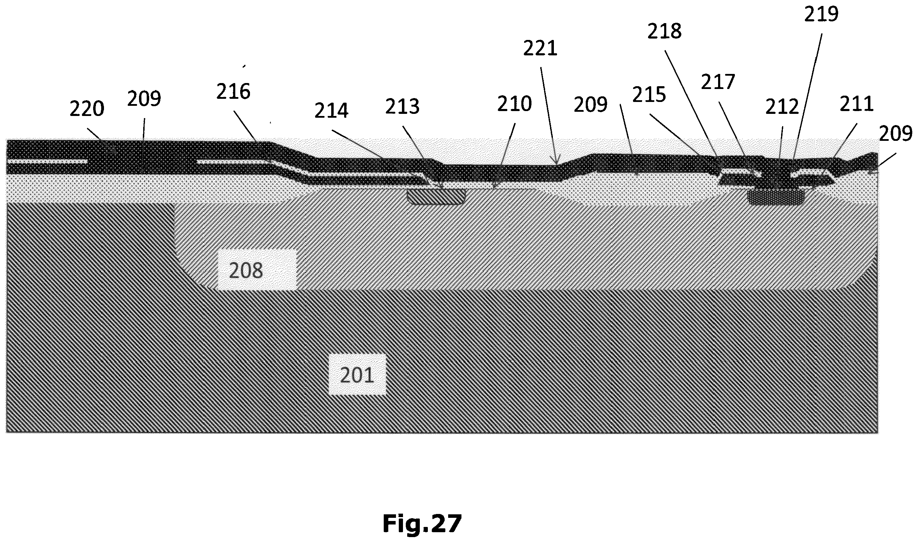

Es folgt die Deposition der zweiten Absorberschicht 221. Diese wird beispielsweise als 350nm Titan ausgeführt. Die Schicht entspricht der Absorberschicht 111 (Fig. 27).

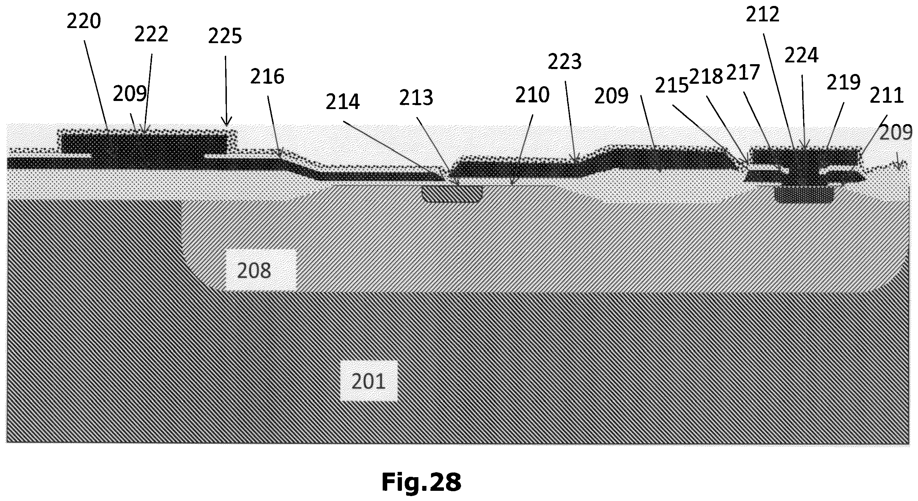

Diese wird wieder durch eine Fototechnik strukturiert. Es entstehen zum einen Kontakte zum ersten Absorber 222, der zweite Absorber 223 und Kontakte zum p-Gebiet 213 (nicht gezeichnet) und zur n-Wanne 224. Das ganze wird mit einer $Si_3N_4$-Schicht 225 abgedeckt, die möglichst dünn ausgeführt wird. Hierbei kann optional (nicht gezeichnet) im Bereich des fotoempfindlichen Elements die Si3N4 Schicht in der folgenden Fototechnik geöffnet werden, um die Resonanzen zu vermindern (Fig. 28).

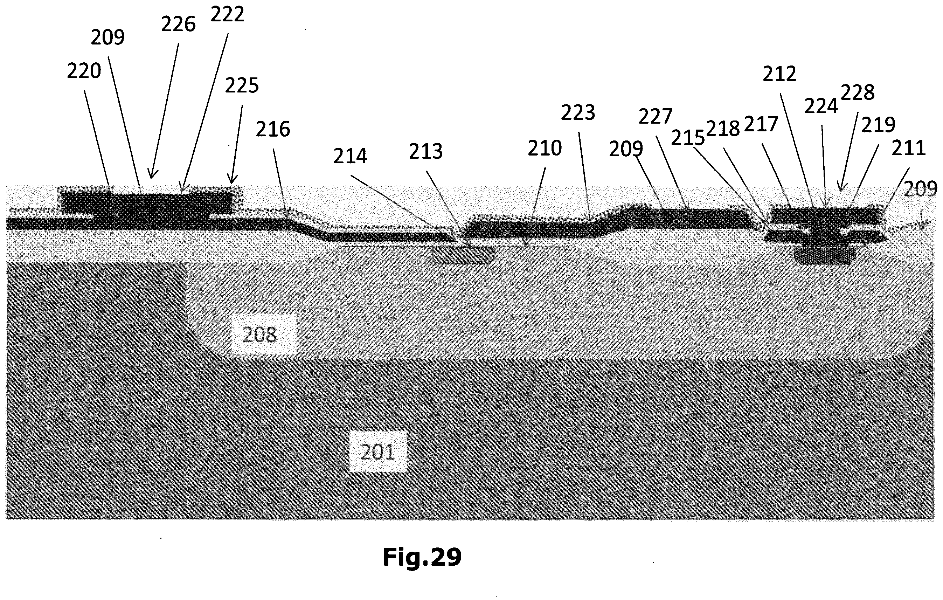

Fig. 29 zeigt die Öffnung der Kontaktfenster in der $Si_3N_4$-Schicht. Es entstehen Öffnungen 226 für den Anschluss der ersten Absorber, Öffnungen 227 für den Anschluss der zweiten Absorber, Öffnungen für den Anschluss der fotoempfindlichen p-Gebiete (nicht gezeichnet) und Öffnungen 228 für den Anschluss der N-Wannen.

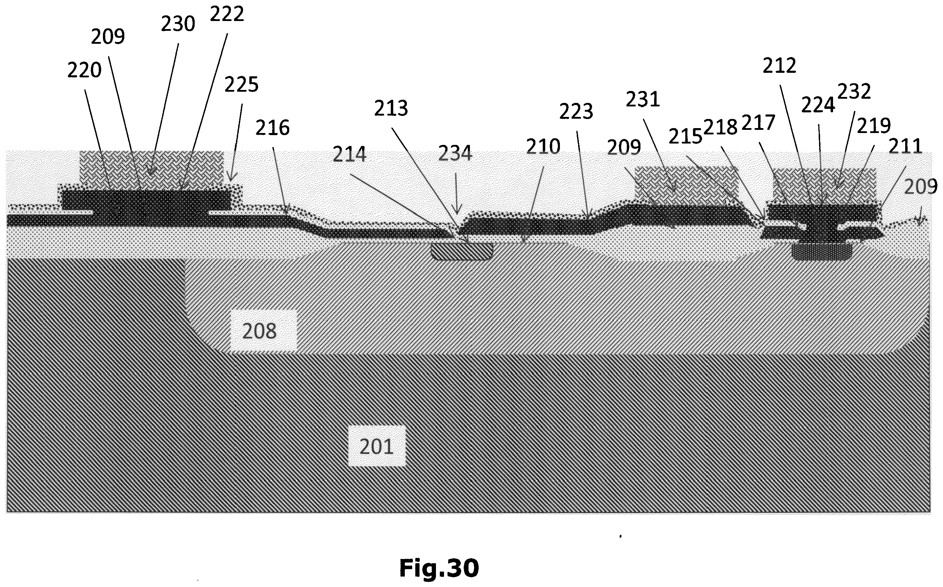

Fig. 30 zeigt die Struktur nach dem Aufbringen einer 1,2μm Aluminum-Schicht und deren Strukturierung durch einen fotolithografischen Prozess. Hierdurch entstehen Bond-Inseln, die die Montage in ein Gehäuse erlauben.Es entstehen Bondinseln für den Anschluss der ersten Absorber 230, für den Anschluss der zweiten Absorber 231, für den Anschluss der p-leitenden Bereiche der fotoempfindlichen Bereiche 213 - nicht gezeichnet- und für den Anschluss der n-Wannen 232.

Für einen Fachmann ist es bekannt, dass die verwendeten Metall-, Oxid und Si3N4-Schichten nach dem Versehen mit einer Fotolackschicht, deren Belichtung und Entwicklung beispielsweise durch nasschemisches oder plasmagestütztes Ätzen strukturiert werden können. Entsprechende Prozesse, die gegenüber den nicht zu strukturierenden Materialien selektiv sind, sind aus der Literatur bekannt.

Nach der Prüfung und dem Trennen beispielsweise mit einer Säge oder einem Laser können die Bauteile in ein Gehäuse eingebaut werden. Hierbei sollte das Gehäuse über eine Öffnung verfügen, die entweder nicht durch ein optisches Fenster, beispielsweise ein Glas, abgedeckt ist oder einen Filter und/oder Diffusor enthält, der die Ausbildung weiterer Resonanzen unterdrückt und ggf. für eine homogene Lichtverteilung sorgt.

Die Erfindung wurde vorstehend in ihrer Applikation bei einem Spektrometer beschrieben. Ganz allgemein ist aber die erfindungsgemäße mikrooptische Transmissionsvorr ichtung bei weitaus mehr Applikationen anwendbar, und zwar immer dann, wenn es darum geht, dass der Durchtritt einer elektromagnetischen Welle durch eine Lochmaske ohne Entstehung störender Resonanzen erfolgen sollte. Insoweit muss also die mikrooptische Transmissionsvorrichtung Resonanzen dämpfende Eigenschaften aufweisen. Diese können durch die Wahl des Materials des mikrooptischen Filters und/oder aber auch durch die Struktur seiner Mikroöffnungen erreicht werden. Wichtig und zweckmäßig insoweit ist es, wenn die Lochstruktur so, wie anhand der Fign. 10 und 12 bis 30 beschrieben, ausgestaltet ist.

## BEZUGSZEICHENLISTE

| | |
|---|---|
| 10 | Spektrometer |
| 10' | Spektrometer |
| 10" | Spektrometer |
| 10''' | Spektrometer |
| 12 | Substrat |
| 14 | Gebiet |
| 16 | Oberseite |
| 18 | Siliziumoxid-Schicht |
| 20 | Lochmaske |
| 22 | Fenster |
| 24 | Fenster |
| 26 | Material |
| 30 | Fotodioden |
| 32 | Lochmaske |
| 34 | Bereiche |
| 36 | Fenster |
| 38 | Kanten |
| 40 | Kanten |
| 42 | Strahlungsdurchlassschlitz(-öffnung) |
| 44 | Spaltbreite |
| 48 | Polarisationsfilter |
| 50 | Aufspannachse |
| 52 | Aufspannachse |
| 54 | E-Feld-Vektor |
| 55 | E-Feld-Vektor |
| 56 | Thermopile-Element |
| 58 | Leiter |
| 60 | Leiter |
| 62 | Überkreuzungspunkt |
| 64 | Membran |
| 66 | Kavitäten |
| 68 | Kavitäten |
| 70 | Wafer |
| 72 | Membran |

| | |
|---|---|
| 74 | Gehäuse |
| 76 | Fenster |
| 78 | Auswerteschaltkreis |
| 80 | Bus |
| 82 | CPU |
| 84 | Speicher |
| 86 | RAM |
| 90 | Standardbus |
| 92 | Filter |
| 94 | Subtrahierschaltungen |
| 95 | Kurve |
| 96 | Kurve |
| 97 | Kurve |
| 101 | Passivierungsschicht (Si3N4-Schicht) |
| 102 | Zwischendielektrizitätsschicht |
| 103 | Dielektrizitätsschicht |
| 104 | Lochmaske |
| 105 | Dicke |
| 107 | Dicke |
| 108 | Dicke |
| 109 | Kante |
| 111 | Lochmaske |
| 112 | Dicke |
| 115 | Träger |
| 167 | Absatz |
| 201 | Substrat |
| 203 | Si3N4-Schicht |
| 204 | Hard-Maske |
| 205 | Hard-Maske |
| 206 | Kontaktgebiete |
| 207 | Kontaktgebiete |
| 209 | Feld-Oxid |
| 210 | Bauelement |
| 211 | Kontakte |
| 213 | Bauelement |
| 214 | Bauelement |
| 215 | Kontaktfenster |
| 216 | Absorber(-schicht) |
| 218 | Kontaktfläche |
| 218 | Oxidschicht |
| 219 | Kontaktfenster |
| 220 | Kontaktfenster |
| 221 | Absorberschicht |
| 222 | Absorber |
| 223 | Absorber |
| 225 | Si3N4-Schicht |
| 226 | Öffnungen |
| 227 | Öffnungen |
| 228 | Öffnungen |
| 230 | Absorber |
| 231 | Absorber |

**Patentansprüche**

1. Vorrichtung zur selektiven Transmission des Spektrums elektromagnetischer Strahlung zwischen einer unteren Grenzwellenlänge und einer oberen Grenzwellenlänge mit

- einem Halbleitersubstrat als Träger (115),
- einer oberhalb des Trägers (115) angeordneten Lochblende aus einem für die interessierende Strahlung im Wesentlichen undurchlässigen Material,
- wobei die Lochblende mindestens einen Strahlungsdurchlassschlitz mit einer Breite zum Hindurchlassen von Strahlung mit einer Wellenlänge aufweist, die kleiner oder gleich der oberen Grenzwellenlänge ist, und wobei die Breite des mindestens einen oder jedes Strahlungsdurchlassschlitzes gleich einem Viertel oder kleiner als ein Viertel der oberen Grenzwellenlänge ist,
- einer elektrisch isolierenden und optisch transparenten Dielektrizitätsschicht (103), die innerhalb des Strahlungsdurchlassschlitzes auf dem Träger (115) ausgebildet ist und sich an dem Strahlungsdurchlassschlitz angrenzend zwischen dem Träger (115) und zumindest einem Teilbereich unterhalb der Lochblende erstreckt,
- wobei die Lochblende zwei lateral gegeneinander versetzte und in unterschiedlichen Ebenen oberhalb des Trägers (115) angeordnete Lochmasken (104,111) aufweist und die beiden Lochmasken (104,111) einander überlappende Fenster aufweisen, die den mindestens einen Strahlungsdurchlassschlitz bzw. jeweils einen Strahlungsdurchlassschlitz definieren,
- wobei die erste Lochmaske (104) auf der Dielektrizitätsschicht (103) ausgebildet ist,
- wobei auf der ersten Lochmaske (104) und innerhalb von deren Fenster oder Fenstern eine Zwischendielektrizitätsschicht (102) aus einem elektrisch isolierenden und optisch durchlässigen Dielektrizitätsmaterial ausgebildet ist,
- wobei die zweite Lochmaske (111) auf der Zwischendielektrizitätsschicht (102) ausgebildet ist,
- wobei die Gesamtdicke der Doppelschicht aus der Dielektrizitätsschicht (103) und der Zwischendielektrizitätsschicht (102) zwischen der zweiten Lochmaske (111) und dem Träger (115) kleiner oder gleich der Hälfte bis einem Viertel der unteren Grenzwellenlänge ist, und
- wobei zumindest die die Breite eines jeweiligen Strahlungsdurchlassschlitzes definierenden Ränder der Fenster der beiden Lochmasken (104, 111) gegensinnig angeschrägt sind, und zwar zur Maximierung einer Dämpfung von durch Kanten mit spiegelnden anderen Flächen der Vorrichtung gebildeten Resonanzstrecken als Folge einer schräg gerichteten Weiterausbreitung der Strahlung nach Durchgang durch den jeweiligen Strahlungsdurchlassschlitz und zur Vermeidung oder zumindest Minimierung einer Resonanz zwischen den Lochmasken (104, 111) und der diesen zugewandten Oberseite des Trägers (115) durch Streuung der Strahlung.

2. Vorrichtung nach Anspruch 1, **dadurch gekennzeichnet, dass** die Dielektrizitätsschicht eine Dicke aufweist, die kleiner als ein oder gleich einem Viertel der unteren Grenzwellenlänge ist.

3. Vorrichtung nach Anspruch 1 oder 2, **dadurch gekennzeichnet, dass** sich die Dielektrizitätsschicht (103) zwischen dem Träger (115) und der gesamten Lochblende erstreckt.

4. Vorrichtung nach Anspruch 1 oder 2, **dadurch gekennzeichnet, dass** die Lochblende außerhalb der Dielektrizitätsschicht (103) auf dem Träger (115) ausgebildet ist.

5. Vorrichtung nach einem der Ansprüche 1 bis 4, **dadurch gekennzeichnet, dass** die Dielektrizitätsschicht (103) innerhalb des oder der Fenster der ersten Lochmaske (104) eine gegenüber ihrem übrigen Erstreckungsbereich reduzierte Dicke aufweist.

6. Vorrichtung nach einem der Ansprüche 1 bis 5, **dadurch gekennzeichnet, dass** das Material und/oder die Materialdicke der Lochblende bzw. der beiden Lochmasken für Absorptionen größer als 60 %, insbesondere größer als 80 % und/oder Reflektionen von kleiner als 40 %, vorzugsweise kleiner als 20 % der interessierenden, nicht auf den Strahlungsdurchlassschlitz bzw. die Strahlungsdurchlassschlitze auftreffenden Strahlung gewählt ist/sind.

7. Vorrichtung nach einem der Ansprüche 1 bis 6, **dadurch gekennzeichnet, dass** die Lochblende eine Vielzahl von unterschiedlich breiten Strahlungsdurchlassschlitzen aufweist, die unterschiedlich große Grenzwellenlängen definieren, bis zu denen der betreffende Strahlungsdurchlassschlitz elektromagnetische Strahlung durchlässt, wobei pro unterschiedlicher Breite ein oder mehrere Strahlungsdurchlassschlitze vorgesehen sind, und dass die Dicke der Schicht oder Schichten zwischen dem Träger (115) und der Lochblende oder Teilen davon bzw. zwischen dem Träger (115) und den beiden Lochmasken (104,111) oder der zweiten Lochmaske (111) jeweils kleiner oder gleich der Hälfte bis einem Viertel der kleinsten der durch die Strahlungsdurchlassschlitze definierten oberen Grenzwellenlängen ist.

8. Verwendung eines optischen Filters nach einem der vorhergehenden Ansprüche zur Wellenlängenselektion von mit einem Festkörperspektrometer zu detektierender elektromagnetischer Strahlung, wobei jeder Strahlungsdurchlassöffnung ein diese eine Strahlungsdurchlassöffnung passierende Strahlung empfangendes, strahlungssensitives Sensorelement zur Ermittlung der Intensität dieser Strahlung zugeordnet ist.

**Claims**

1. Apparatus for selective transmission of the spectrum of electromagnetic radiation in the range between a lower limit wavelength and a upper limit wavelength, comprising

   - a semiconductor substrate as a carrier (115),
   - a pinhole diaphragm arranged above the carrier (115) and made of a material substantially impermeable to the radiation of interest,
   - the pinhole diaphragm having at least one radiation passage opening with a width allowing for the passage of radiation of a wavelength less than or equal to the upper limit wavelength, and the width of the at least one or each radiation passage opening being equal to a quarter or smaller than a quarter of the upper limit wavelength,
   - an electrically insulating and optically transparent dielectric layer (103) formed on the carrier (115) within the radiation passage opening and extending, while adjoining the radiation passage opening, between the carrier (115) and at least one partial region below the pinhole diaphragm,
   - wherein the pinhole diaphragm comprises two aperture masks (104,111) laterally displaced relative to each other and arranged in different planes above the carrier (115) and the two aperture masks (104,111) comprise mutually overlapping windows defining the at least one radiation passage opening or defining one respective radiation passage opening,
   - wherein the first aperture mask (104) is formed on the dielectric layer (103),
   - wherein, on the first aperture mask (104) and within the window or windows thereof, an intermediate dielectric layer (102) is formed which is made of an electrically insulating and optically permeable dielectric material,
   - wherein the second aperture mask (111) is formed on the intermediate dielectric layer (102),
   - wherein the overall thickness of the double layer comprising the dielectric layer (103) and the intermediate dielectric layer (102) and arranged between the second aperture mask (111) and the carrier (115), is less than or equal to a half to a quarter of the lower limit wavelength, and
   - wherein at least the edges of the windows of the two aperture masks (104,111) that define the width of a respective radiation passage opening are beveled in opposite senses, for maximizing of a damping of resonance paths formed by edges with mirroring other surfaces of the apparatus, said damping maximization being effected by oblique further propagation of the radiation after passing through the respective radiation passage opening, and for avoiding or at least minimizing a resonance between the aperture masks (104,111) and the confronting top side of the carrier (115) by scattering the radiation.

2. The apparatus according to claim 1, **characterized in that** the dielectric layer has a thickness less than or equal to a quarter of the lower limit wavelength.

3. The apparatus according to claim 1 or 2, **characterized in that** the dielectric layer (103) extends between the carrier (115) and the entire pinhole diaphragm.

4. The apparatus according to claim 1 or 2, **characterized in that** the pinhole diaphragm is formed on the carrier (115) externally of the dielectric layer (103).

5. The apparatus according to any one of claims 1 to 4, **characterized in that** the dielectric layer (103) within the window or windows of the first aperture mask (104) has a reduced thickness relative to its remaining extension area.

6. The apparatus according to any one of claims 1 to 5, **characterized in that** the material and/or the material thickness of the pinhole diaphragm and respectively of the two aperture masks is/are selected for absorptions larger than 60%, particularly larger than 80%, and/or for reflections less than 40%, preferably less than 20% of the radiation of relevance not incident on the radiation passage opening and respectively radiation passage openings.

7. The apparatus according to any one of claims 1 to 6, **characterized in that** the pinhole diaphragm comprises a plurality of radiation passage openings having different sizes and defining differently high upper limit wavelengths up to which the respective radiation passage opening allows for the passage of electromagnetic radiation, wherein, for each different width, one or a plurality of radiation passage openings are provided, and wherein the thickness of the layer or layers between the carrier (115) and the pinhole diaphragm or parts thereof, and respectively between the carrier (115) and the two aperture masks (104,111) or the second aperture mask (111), is each time less than or equal to a half to a quarter of the smallest one of the upper limit wavelengths defined by the radiation passage openings.

8. Use of an optical filter according to any one of the preceding claims for wavelength selection of electromagnetic radiation to be detected by a solid-body spectrometer, wherein each radiation passage opening has assigned to it a radiation-sensitive sensor element receiving this radiation which passes through a radiation passage opening, for detection of the intensity of this radiation.

**Revendications**

1. Dispositif pour la transmission sélective du spectre d'un rayonnement électromagnétique entre une longueur d'onde limite inférieure et une longueur d'onde limite supérieure, avec

- un substrat semi-conducteur comme support (115),
- un diaphragme en un matériau sensiblement non-transparent pour le rayonnement en question, disposé au-dessus du support (115),
- le diaphragme comprenant au moins une fente ayant une largeur permettant le passage d'un rayonnement ayant une longueur d'onde qui est inférieure ou égale à la longueur d'onde limite supérieure, et la largeur de ladite au moins une ou de chaque fente permettant le passage d'un rayonnement étant égale ou inférieure à un quart de la longueur d'onde limite supérieure,
- une couche diélectrique (103) électriquement isolante et optiquement transparente qui est formée sur le support (115) à l'intérieur de la fente permettant le passage d'un rayonnement et qui s'étend de façon adjacente à la fente permettant le passage d'un rayonnement, entre le support (115) et au moins une zone partielle en-dessous du diaphragme,
- le diaphragme comprenant deux masques perforés (104, 111) latéralement décalés l'un par rapport à l'autre et disposés sur des plans différents au-dessus du support (115), et les deux masques perforés (104, 111) comprenant des fenêtres se chevauchant qui définissent ladite au moins une fente permettant le passage d'un rayonnement ou qui définissent chacune une fente permettant le passage d'un rayonnement,
- le premier masque perforé (104) étant formé sur la couche diélectrique (103),
- une couche intermédiaire diélectrique (102) en un matériau diélectrique électriquement isolant et optiquement transparent étant formée sur le premier masque perforé (104) et à l'intérieur de sa fenêtre ou de ses fenêtres,
- le second masque perforé (111) étant formé sur la couche intermédiaire diélectrique (102),
- l'épaisseur totale de la couche double formée par la couche diélectrique (103) et la couche intermédiaire diélectrique (103) entre le second masque perforé (111) et le support (115) étant inférieure ou égale à la moitié jusqu'à un quart de la longueur d'onde limite inférieure, et
- les bords des fenêtres des deux masques perforés, qui définissent la largeur d'une fente respective permettant le passage d'un rayonnement, étant biseautés dans des sens opposés, et cela pour rendre maximale une atténuation de trajets de résonance formés par des bords avec d'autres surfaces réfléchissantes du dispositif comme conséquence d'une suite de propagation du rayonnement après le passage par la fente respective permettant le passage d'un rayonnement et pour éviter ou pour le moins pour minimiser une résonance entre les masques perforés (104, 111) et la face supérieure du support (115) orientée vers ceux-ci.

2. Dispositif selon la revendication 1, **caractérisé en ce que** la couche diélectrique présente une épaisseur qui est inférieure ou égale à un quart de la longueur d'onde limite inférieure.

3. Dispositif selon la revendication 1 ou 2, **caractérisé en ce que** la couche diélectrique (103) s'étend entre le support (115) et le diaphragme entier.

4. Dispositif selon la revendication 1 ou 2, **caractérisé en ce que** le diaphragme est formé sur le support (115) en dehors de la couche diélectrique (103).

5. Dispositif selon l'une des revendications 1 à 4, **caractérisé en ce que** la couche diélectrique (103) présente, à l'intérieur de la ou des fenêtres du premier masque perforé (104), une épaisseur réduite par rapport à celle du restant de son étendue.

6. Dispositif selon l'une des revendications 1 à 5, **caractérisé en ce que** le matériau et/ou l'épaisseur de matériau respectivement du diaphragme et des deux masques perforés est choisi(e) / sont choisis pour des absorptions supérieures à 60 %, notamment supérieures à 80 % et/ou des réflexions inférieures à 40 %, de préférence inférieures à 20 %, du rayonnement en question n'arrivant pas sur la ou les fente(s) permettant le passage d'un rayonnement.

7.  Dispositif selon l'une des revendications 1 à 6, **caractérisé en ce que** le diaphragme comprend une pluralité de fentes permettant le passage d'un rayonnement, de largeurs différentes, qui définissent des longueurs d'onde limites de différentes valeurs jusqu'auxquelles la fente respective permettant le passage d'un rayonnement laisse passer un rayonnement électromagnétique, une ou plusieurs fentes permettant le passage d'un rayonnement étant prévues par largeur différente, et **en ce que** l'épaisseur respective de la couche ou des couches entre le support (115) et le diaphragme ou des parties de celui-ci ou entre le support (115) et les deux masques perforés (104, 111) ou le second masque perforé (111) est inférieure ou égale à la moitié jusqu'à un quart de la longueur d'onde limite supérieure définie par les fentes permettant le passage d'un rayonnement.

8.  Utilisation d'un filtre optique selon l'une des revendications précédentes pour la sélection de longueurs d'onde d'un rayonnement électromagnétique destiné à être détecté à l'aide d'un spectromètre à l'état solide, un élément capteur sensible à du rayonnement, recevant un rayonnement passant par une ouverture de passage d'un rayonnement, étant associé à chaque ouverture de passage d'un rayonnement, pour déterminer l'intensité de ce rayonnement.

**Fig.1**

**Fig.2**

**Fig.3**

**Fig.4**

10'''

Fig.5

**Fig.6**

**Fig.7**

relativer Transmissionsfaktor gegenüber geometrischer optischer Transmission T'

Transmission einschließlich geometrisch optischer Transmission T

Transmission für geometrische Optik

**Fig.8**

Transmission einschließlich geometrisch optischer Transmission

Theoretischer Wert

**Fig.9**

**Fig.10**

Fig.11

EP 2 847 557 B1

**Fig.12**

EP 2 847 557 B1

**Fig.13**

**Fig.14**

201

**Fig.15**

Fig.16

**Fig.17**

**Fig.18**

EP 2 847 557 B1

EP 2 847 557 B1

**Fig.19**

EP 2 847 557 B1

**Fig.20**

**Fig.21**

EP 2 847 557 B1

**Fig.22**

209     214   213    210    209    215    212   211

209

208

201

**Fig.23**

**Fig.24**

EP 2 847 557 B1

209    216    214    213    210    209    215 218 217    212    211

                                                              209

208

201

EP 2 847 557 B1

44

**Fig.25**

**Fig.26**

EP 2 847 557 B1

Fig.27

**Fig.28**

**Fig.29**

**Fig.30**

EP 2 847 557 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1475963 A
- EP 1517374 A
- US 20060044429 A
- US 20100176280 A
- WO 2009106316 A
- US 20080170143 A
- EP 2251718 A
- EP 2521179 A

**In der Beschreibung aufgeführte Nicht-Patentliteratur**

- **RIBBONS ; SLITS.** *Physical Review,* 01. Dezember 1938, vol. 54, 895-898